# EUROPEAN PATENT APPLICATION

(11) **EP 2 104 211 A1**
(43) Date of publication of application: **23.09.2009**
(21) Application number: 06840826.9
(22) Date of filing: 31.12.2006
(51) Int. Cl.: H02K 57/00, H02N 11/00, H02K 35/00, C02F 1/44, F03G 7/00

(54) **LIFTING DEVICE, POWER GENERATION DEVICE AND SEA REVERSE OSMOSIS DEVICE**

(71) Applicant: Lanzhou Jinfule Biotechnology Co., Ltd., Gansu 730030 (CN); Kinstar International Limited, Road Town (VG); Spring Power Limited, Road Town, Tortola (VG); Jin Jin Pacifique Compagnie, 92160 Antony (FR)
(72) Inventor: JIN, Jifan, Gansu 730030 (CN)
(74) Representative: Schlotter, Alexander Carolus Paul
(86) International application number: PCT/CN2006/003796
(87) International publication number: WO 2008/080261

(57) **Abstract**

A lifting device includes: at least one first magnetic body (5), which is positioned on a platform and driven by a driving unit so as to move along a predetermined track; at least one second magnetic body (6), which is positioned above a part of track of the first magnetic body (5) by a supporting device, and the magnetism of which is repulsive to that of the first magnetic body (5); and a lifting mechanism, which is fixedly connected to the second magnetic body (6), the second magnetic body (6) is lifted or lowered according to the first magnetic body (5)'s passing through or leaving from the second magnetic body (6) during its movement course so as to cause the lifting mechanism to be lifted, lowered or swung. According to the present invention, the lifting device can lift heavy objects by magnetic energy existing in the nature and has a simple structure, broad applicability, energy saving and high environmental protectionability. A power generation device and a sea reverse osmosis device that have the lifting device are disclosed.

## Description

### Field of the Invention

This invention relates to a lifting device, as well as a power generation device with the lifting device and sea reverse osmosis device that has the lifting device.

### Background of the Invention

For the world's large population, energy is a basic issue of the survival and development. It is inseparable from energy to improve living standards and develop economy. However, energy crisis has been a problem for countries of the world all the time. Power shortage is an issue that all previous governments of each country must face. Due to improvement of production and living standards, power shortage in China has been more obvious day by day, especially during the peak period of power usage. In order to ease the power shortage situation, the government has to take measures to set up restrictions on power usage. The implementation of this measure will greatly hamper consumption which is not conducive to Chinese economic growth. Therefore, countries around the world including China have been striving to improve the power supply capacity.

The main way of current power generation is thermal power generation which consumes a great deal of one-off energy and pollutes the environment heavily. Presently, countries are all working on environmental power generation technology research by utilizing natural energy, wherein, the hydroelectric power generation technology has been relatively mature and used widely, and the researches on power generation technology by using wind power, solar power and sea liquid are still under study. However, none of those researches pays sufficient attention on magnetic energy, another exiting natural energy.

At present, implementing reverse osmosis treatment on seawater by reverse osmosis membrane is an important technology which takes full advantage of ocean resources to obtain freshwater resources. However, the exiting sea reverse osmosis devices have the disadvantages of high cost, long construction cycle, maintenance difficult and low rate of converting seawater into freshwater. In addition, this kind of seawater desalinization technology requires consumption of a large amount of exiting energy resources and high costs. No high-efficiency sea osmosis technology mainly utilizing natural energy has been developed yet.

### Summary of the Invention

In view of problems mentioned above, one of the objects of the present invention is to provide a lifting device utilizing magnetic force to lift objects; the said lifting device can lift objects and change gravitational potential energy of the objects by using magnetic energy between magnets.

Another object of the present invention is to provide a power generation device which can transfer the objects' gravitational potential energy changed by magnetic energy between magnets into electric energy.

Still another object of the present invention is to provide a sea reverse osmosis device which can utilize magnetic energy between magnets to change gravitational potential energy of objects so that sea reverse osmosis treatment can be conducted by utilizing the changed gravitational potential energy.

The lifting device according to the invention comprises: at least one first magnetic body, the said first magnetic body is positioned on a platform and driven by a driving unit so as to move along a predetermined track; at least one second magnetic body, the said second magnetic body is positioned above part of track of the said first magnetic body, and the magnetism of which is repulsive to that of the first magnetic body; a lifting mechanism, the said lifting mechanism is positioned on a supporting device and connected to the second magnetic body; wherein, the second magnetic body is lifted or lowered vertically in cycle according to the first magnetic body's passing through or leaving from the second magnetic body at a set speed in cycle, so as to cause the lifting mechanism to be lifted, lowered or swung.

According to the lifting device of this invention, wherein, the said platform is a rotation platform which can rotate around an axis; the said driving unit is connected to the rotation platform to drive the platform to rotate; the said first magnetic body is fixed on the rotation platform and rotates according to the rotation thereof.

According to the lifting device of this invention, wherein, the said platform is a supporting platform which is fixedly positioned, the said driving unit is connected to the said first magnetic body to drive the said first magnetic body to move on the said supporting platform.

According to the lifting device of this invention, wherein, the said lifting mechanism is a member bar group, the said member bar group comprises a cross rod and a vertical rod which is positioned vertically under the cross rod; the said support bracket is set up with a hole on its top part, the said hole has a diameter slightly larger than that of the said vertical rod and smaller than the length of the said cross rod, in order to enable the said vertical rod to penetrate the said hole for upward and downward movements; the said cross rod is setup with buffer springs under both ends for buffering the impact on the said support bracket by the said cross rod when the member bar group falls down caused by gravity.

According to the lifting device of this invention, wherein, the said lifting mechanism is pulley block, the said pulley block includes a plurality of fixed pulleys and toothed rope-buckle cable which rounds the said fixed pulleys, and the said toothed rope- buckle cable has one end fixing the second magnetic body and another end connected with a lifting stand.

According to the lifting device of this invention, wherein, the said lifting mechanism is a hydraulic lifting mechanism, the said hydraulic lifting mechanism includes liquid reservoir, hydraulic cylinder, piston and extension sleeve which are positioned inside the said hydraulic cylinder, as well as drainage pipelines and one-way valve which connect the said liquid reservoir, hydraulic cylinder and extension sleeve ; a lifting stand is fixed on the upper top part of the extension sleeve; wherein, the said second magnetic is connected with the said piston.

According to the lifting device of this invention, wherein, the said lifting mechanism comprises at least a set of oscillating piece with magnetic pivot and a bearing support with magnetic support which has the shape and position corresponding to the said magnetic pivot; the magnetism of the said magnetic pivot is set repulsive to that of the said magnetic support, in order to ensure that the said oscillating piece suspends above the said bearing support; wherein, the said second magnetic body is positioned below an end of the said oscillating piece.

According to the lifting device of this invention, wherein, the said oscillating piece comprises a lever and a stabilizing bracket which is fixed on the said lever.

According to the lifting device of this invention, wherein, the said oscillating piece comprises a disc-type stabilizing bracket and annular pipe fittings positioned at the outer edge of the disc-type stabilizing bracket.

The power generation device according to the invention comprises: a lifting device as mentioned above, a lifting channel which is positioned around the track of the said second magnetic body; a metal coil for power generation positioned in pipe wall of the said movement pipeline; a power transmission device connected with the said metal coil to transport the generated power outside.

The power generation device according to the invention comprises: a lifting device as mentioned above; a generator fixed at the upper part of the support bracket, the rotor of the said generator which is connected to the said lifting mechanism and is driven by the said lifting mechanism to rotate to produce power; a power output device connected with the metal coil of the said generator to transport the generated power outside.

The power generation device according to the invention comprises: a lifting device as mentioned above, wherein, pipe fittings are fixedly positioned in the said oscillating piece, the said pipe fitting swing along with the said oscillating piece, the movement body installed in the said pipe fittings moves back and forth therein by the function of its gravity; a magnet or metal coil is installed on pipe wall of the said pipe fittings, a metal coil or magnet is installed in the said movement body, correspondingly.

The power generation device according to the invention comprises: a lifting device as mentioned above, a lifting channel including a upstream channel and a downlink channel, in which the said lifting stand is lifted and lowered in the said upstream channel, the said downlink channel has an upper opening leading to the upper opening of the said upstream channel and a lower opening leading to the lower opening of the said upstream channel; a movement body for power generation which moves circularly in the lifting channel formed by the said upstream channel and downlink channel; a metal coil or magnet is installed in the said movement body, while a magnet or metal coil is installed in the said downlink channel, correspondingly; a power output device is connected with the said metal coil to transport the generated power outside.

The power generation device according to the invention further comprises: a member bar group connected with the second magnet body, the vertical rod of the member bar group is connected with the rotor of the generator.

The power generation device according to the invention comprises: a lifting device as mentioned above, wherein, the said lifting mechanism is a large piston with a lifting rod fixedly positioned below the large piston; a lifting channel installed at the center of the rotation platform; the lower end of the said lifting rod is deeply inserted into the said lifting channel; a movement body fixedly positioned at the lower end of the said lifting rod does up and down movements in the said lifting channel along with the said lifting rod; a hydraulic buffer device including a water tank, a water tank piston, a bumper bracket fixed on the water tank piston and a buffer board fixed on the top of the bumper bracket which penetrates into the lifting channel, the discharge pipeline connected the water tank and outside environment.

The seawater reverse osmosis device according to the invention which is installed in the seawater comprises:
a lifting device as mentioned above; wherein, the said lifting mechanism is a large disk-shaped piston with a lifting rod fixedly positioned below the piston; a large piston, the said second magnet body is fixedly positioned at the lower part of the said large seawater piston; a osmosis chamber, which is set up with a piston therein which is fixedly connected to the said large piston; a seawater delivery pipeline whose one end connects to the osmosis chamber and another end leads to the seawater; a freshwater reservoir; in which the reverse osmosis membrane is installed between the said osmosis chamber and the said freshwater reservoir and connects to a freshwater collecting device through a freshwater discharge pipeline; a condensed water reservoir; which connects to the lower part of the osmosis chamber through a condensed water delivery pipeline, and connects to a condensed water collecting device through a condensed water discharge pipeline.

The lifting device according to the invention vertically lifts and lowers objects continually in cycle by mainly utilizing the interaction between magnetic energy and gravitation potential energy; the said device takes full advantages of natural energy which is energy-saving and environmental. Its size can be either large or small. It's economic, functional, and widely useful.

The power generation device according to the invention mainly utilizes the lifting device mentioned above to drive the object to move for generating power. The said device has the advantages of low investment, short construction cycle, wide application scope and high generating efficiency. In addition, the power generation device according to the invention can be formed into small size which can produce power during movement; therefore, it can be ideal energy source for various vehicles.

The sea reverse osmosis device according to the invention mainly utilizes the lifting device mentioned above to lift heavy objects, and then the gravitation potential energy of the object can be used as energy resource of sea reverse osmosis treatment. The device has the advantages of simple structure, easy maintainability and low cost.

### Brief Description of the Drawings

Figure 1 is a longitudinal section view schematic diagram of the power generation device according to the first embodiment of this invention;
Figure 2 is a longitudinal section view schematic diagram of the power generation device according to the second embodiment of this invention;
Figure 3a is a longitudinal section view schematic diagram of the power generation device according to the third embodiment of this invention; Figure 3b is a top view schematic diagram of the power generation device according to the third embodiment of this invention;
Figure 4a is a longitudinal section view schematic diagram of the power generation device according to the fourth third embodiment of this invention; Figure 4b is a top view schematic diagram of the power generation device shown in Figure 4a;
Figure 5a is a longitudinal section view schematic diagram of the power generation device according to the fifth embodiment of this invention; Figure 5b is a top view schematic diagram of the power generation device shown in Figure 5a; Figure 5c and Figure 5d present the other two forms of layout of the first magnet body in the power generation device shown in Figure 5b;

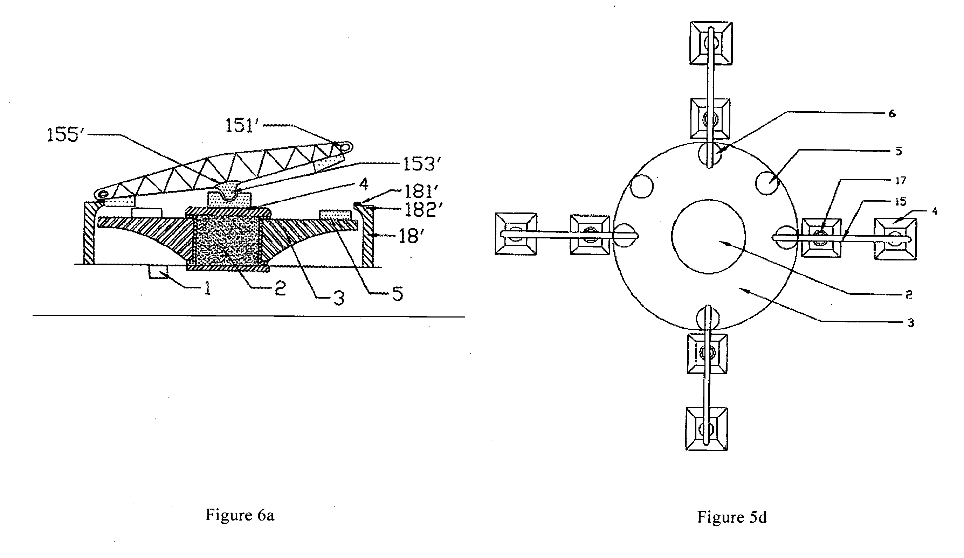

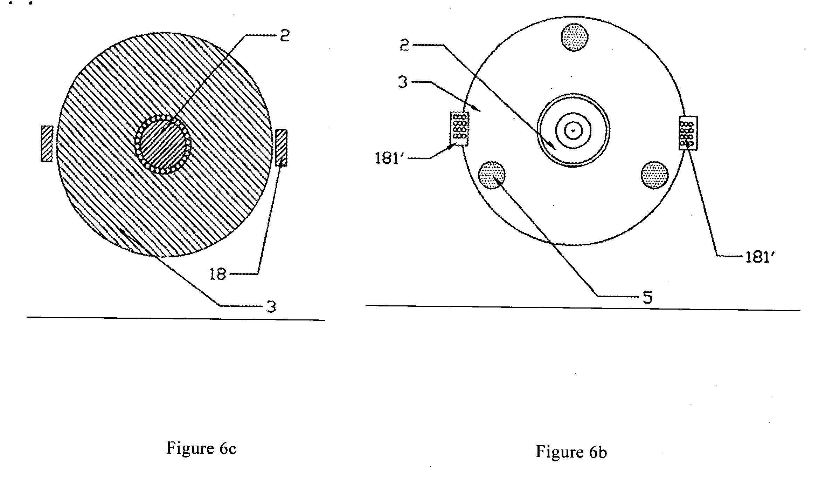

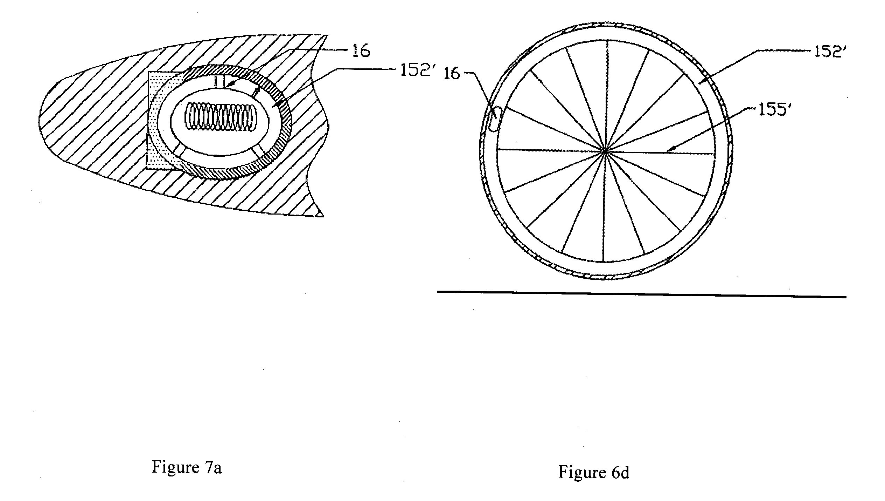

Figure 6a is a longitudinal section view schematic diagram of the power generation device according to the sixth embodiment of this invention; Figure 6b is a top view schematic diagram of the power generation device according to the sixth embodiment as shown in Figure 6a with its oscillating piece removed; Figure 6c is a section view schematic diagram of the power generation according to the sixth embodiment of this invention along A-A directional line shown in Figure 6a; Figure 6d is a section view schematic diagram of the oscillating piece of the power generation device according to the sixth embodiment of this invention along B-B directional line shown in Figure 6a;
Figure 7a to Figure 7f present several forms of layout of the magnet and metal coil of the power generation device according to the sixth embodiment of this invention shown in Figure 6a;
Figure 8a is a longitudinal section view schematic diagram of the power generation device according to the seventh embodiment of this invention; Figure 8b is a top view schematic diagram of the power generation device shown in Figure 8a; Figure 8c to Figure 8d present several forms of layout of the lifting channel of the power generation device shown in Figure 8a;
Figure 9a to Figure 9e present several forms of layout of the magnet and metal coil which are used for power generation of the power generation device shown in Figure 8a;
Figure 10a to Figure 10i present several forms of the movement body of the power generation device shown in Figure 8a;
Figure 11 is a longitudinal section view schematic diagram of the power generation device according to the eighth embodiment of this invention;
Figure 12a is a longitudinal section view schematic diagram of the power generation device according to the ninth embodiment of this invention; Figure 12b is A-A directional section view schematic diagram of the power generation device in Figure 12a; Figure 12c is B-B directional section view schematic diagram of the power generation device in Figure 12a;
Figure 13 is a longitudinal section view schematic diagram of the power generation device according to the tenth embodiment of this invention;
Figure 14 is a longitudinal section view schematic diagram of the power generation device according to the eleventh embodiment of this invention;
Figure 15 is a longitudinal section view schematic diagram of the power generation device according to the twelfth embodiment of this invention;
Figure 16a to Figure 16j present several forms of layout of the first magnet body of the power generation device according to the twelfth embodiment of this invention;
Figure 17a is a longitudinal section view schematic diagram of the power generation device according to the thirteenth embodiment of this invention; Figure 17b is a longitudinal section view schematic diagram of the power generation device in Figure 17a along another direction; Figure 17c is a longitudinal section view schematic diagram of the power generation device in Figure 17a whose large piston stays at the lowest position;
Figure 18 is a longitudinal section view schematic diagram of the power generation device according to the fourteenth embodiment of this invention;
Figure 19a is a longitudinal section view schematic diagram of the power generation device according to the fifteenth embodiment of this invention; Figure 19b is a longitudinal section view schematic diagram of the power generation device in Figure 19a along another direction; Figure 19c is a longitudinal section view schematic diagram of the power generation device in Figure 19a whose large piston stays at the lowest position;
Figure 20a is a longitudinal section view schematic diagram of the sea reverse osmosis device according to the sixteenth embodiment of this invention; Figure 20b is the top view schematic diagram of the sea reverse osmosis device shown in Figure 20a; Figure 20c presents one design of the support platform of the sea reverse osmosis device in Figure 20a which can prevent from accumulation of stagnant water; Figure 20d presents another design of the support platform of the sea reverse osmosis device in Figure 20a which can prevent from accumulation of stagnant water;
Figure 21 is a longitudinal section view schematic diagram of the power generation device according to the seventeenth embodiment of this invention;
Figure 22 is a longitudinal section view schematic diagram of the power generation device according to the eighteenth embodiment of this invention;
Figure 23 is a longitudinal section view schematic diagram of the power generation device according to the nineteenth embodiment of this invention.

### Detailed Description of the Invention

The preferred embodiments will be described in detail in conjunction with figures.

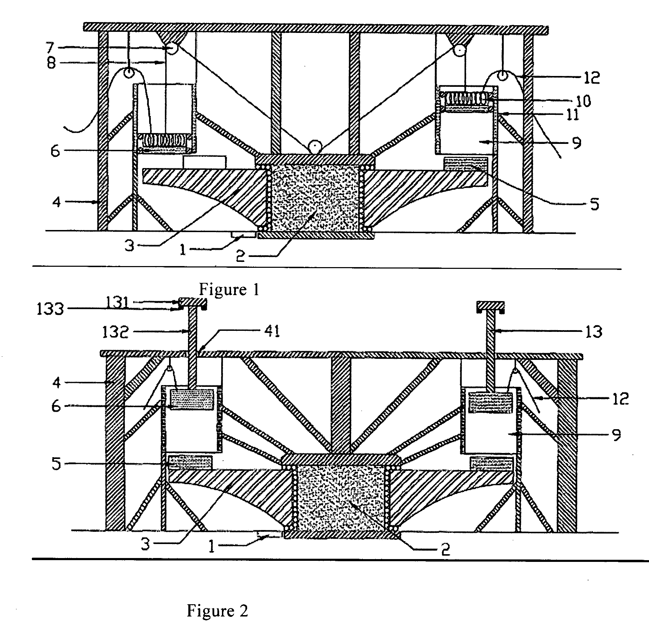

As shown in Figure 1, the power generation device of example 1 of this invention comprises lifting device and power-generating unit.

Wherein, the lifting device comprises: drive motor 1, stationary axis 2 and rotation platform 3. The stationary axis 2 fixed on the ground surface includes: base 21 installed underground, shaft 22 fixed on the base 21, and support platform 23 fixed on the top of the shaft 22. A disc-type rotation platform 3 installed around the stationary axis 2 and connected with the drive motor 1 can rotate, driven by the drive motor 1, around the stationary axis 2; there are roll balls 24 installed between the rotation platform 3 and the stationary axis 2 so as to reduce pivoting friction of the rotation platform 3.

The lifting mechanism further includes: support bracket 4, first magnet body 5, second magnet body 6 and pulley block 7. The support bracket 4 is fixed on the ground floor as well as the stationary axis 2. The first magnet body 5 includes three magnets having the same shape which are fixed on an identical circumference on the upper plane of the rotation platform 3 at equal interval. The pulley block 7 for stabilizing the first magnet body 5 includes a fixed pulley installed on the stationary axis 2 and two fixed pulleys installed on the top of the support bracket 4 symmetrically about the axes of the stationary axis 2, and rope 8 rounds the pulley block 7. The second magnet body 6 includes two identical magnets which are connected to both ends of the rope 8 of the pulley block 7 and installed symmetrically about the axes of the stationary axis 2. The magnetism of the second magnet body 6 is repulsive to that of the first magnet body 5 and hanging above it at a set distance away from which.

The lifting device further includes lifting channel 9 installed around the second magnet body 6 and fixed by the support bracket 4. The second magnet body 6 contacts with the lifting channel 9 through the roller wheel 61.

The power-generating unit includes metal coil 10 and magnet 11. Wherein, the metal coil 10 is installed in the magnet body 6, the magnet 11 for power generation is installed in the pipe wall of the lifting channel 9.

The said power-generating unit further includes cable 12 connected to the metal coil 10 which transports generated power outside, including the public grid.

The working process of the power generation device of the said example is described as follows.

At initial position, the two second magnet bodies 6 are placed at the identical horizontal plane. The drive motor 1 is started up to rotate the rotation platform 3, in turn drives the first magnet body 5 fixed on the rotation platform 3 to rotate. When the rotating first magnet 5 cuts in the position below the second magnet body 6 which is suspending above it, the repulsive force between them brings the second magnet body up; as the first magnet body 5 is not arranged correspondingly to the second magnet body 6 respectively, at this point, there is no first magnet body 5 below the second magnet body 6 at the other end of rope 8, that is to say, there is no repulsive force from the first magnet body 5, which brings the second magnet body 6 at the other end of rope 8 down. At this point, metal coil installed on the second magnet body 6 moves relative to magnet installed on pipe wall of the lifting channel 9 to produce power by the electromagnetic action between stator and rotor. The generated power is transported to public grid through cable 12. The first magnet body 5 also can be configured as six natural magnets which are installed on an identical circumference at equal interval.

As shown in Figure 2, the power generation device of example 2 of this invention has basically same structure as that in example 1. The difference is only in that:

The first magnet body 5 includes four magnets having the same shape which are fixedly positioned on the outer circumference of the rotation platform 3 at equal interval.

The pulley block 7 in example 1 is replaced by the member bar group 13 which stabilizes the second magnet body and goes up and down with the second magnet body 6. There are two member bar groups 13 arranged symmetrically about the axes of the stationary axis 2, each of which includes a cross rod 131 and a vertical rod 132 which is positioned vertically below the cross rod. Correspondingly, the support bracket 4 is installed with hole 41 on its top part, the said hole 41 has a diameter slightly larger than that of the vertical rod 132 and smaller than the length of the cross rod 131. The vertical rod 132 can penetrate through the hole 41 for upward and downward movements. The cross rod 131 is installed with buffer springs under its both ends for buffering the impact on the said support bracket 4 by the said cross rod 131 when the member bar group 13 falls down by gravity.

The second magnet body 6 includes two identical magnets fixed at the lower part of two fixing brackets 13. The said second magnet body 6 has the magnetism repulsive to that of the first magnet body 5 and hanging above it at a set distance away from which.

The working process of the power generation device of the said example is as follows.

At initial position, the two second magnet bodies 6 are placed at the identical horizontal plane. The drive motor 1 is started up to rotate the rotation platform 3, in turn drives the first magnet body 5 which is fixed on the rotation platform 3 to rotate. When the rotating first magnet 5 cuts in the position below the second magnet body 6 which is suspending above it, the repulsive force between the two magnets brings a magnet of the second magnet body 6 up; as the first magnet body 5 and the second magnet body 6 are arranged symmetrically, and at this point, another rotating magnet of the first magnet body 5 also cuts in the position below the second magnet body 6, the repulsive force between the two magnets brings another magnet of the second magnet body 6 up simultaneously relative to the first magnet body 5. At this point, metal coil installed on the second magnet body 6 moves relative to magnet installed on the pipe wall of the lifting channel 9 and hence produces power during the upward and downward movements due to the electromagnetic action between stator and rotor. The generated power is transported to outside through cable 12.

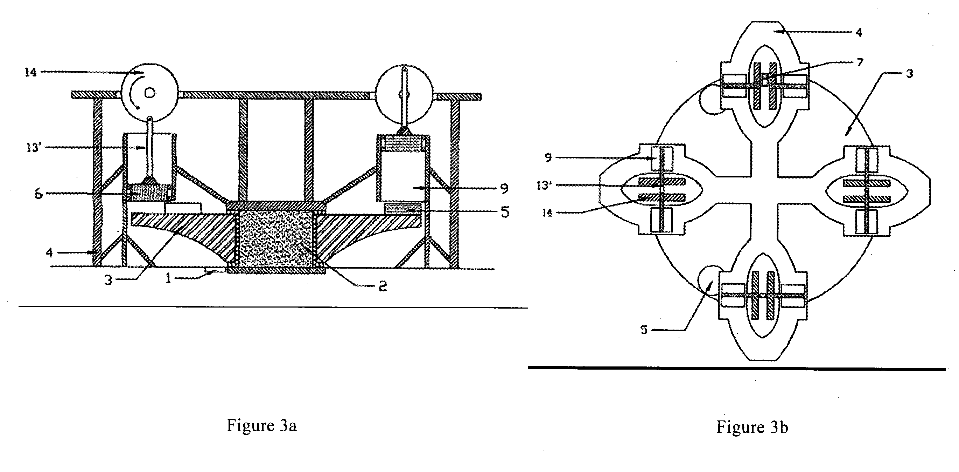

As shown in Figures 3a and 3b, the power generation device according to example 3 of the invention is basically same as that in example 2. The difference is only in that:

The power-generating unit in the said example is not metal coil and magnet which are installed on the shift device directly but four generators 14 installed on the support bracket 4. The rotor of generator 14 is connected to the member bar group 13' whose another end is fixed with the second magnet 6.

The first magnet body 5 includes three natural magnets which are arranged on an identical circumference at equal interval.

The working process of the power generation device of the said example is similar with that of example 2.

At initial position, four second magnet bodies 6 are placed at the identical horizontal plane. The drive motor 1 is started up to rotate the rotation platform 3, in turn drives the first magnet body 5 which is fixed on the rotation platform 3 to rotate. When the rotating first magnet 5 cuts in the position below one second magnet body 6 which is suspending above it, the repulsive force between the two magnets brings the second magnet body 6 up, which brings the member bar group 13' fixed together with the second magnet body 6 up, and the member bar group 13' rotates generator 14 to produce power which is transported to outside through cable 12. At this point, the other three second magnets 6 which get rid of the repulsive force from the first magnet body 5 go down by the function of gravity.

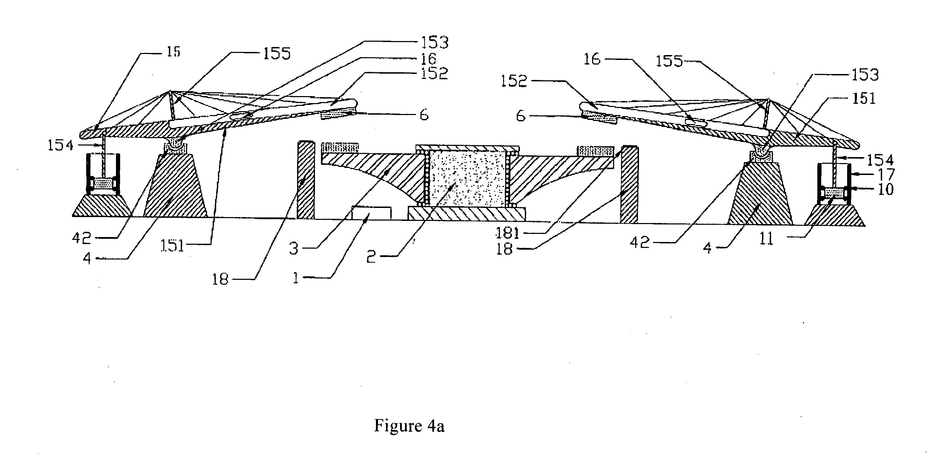

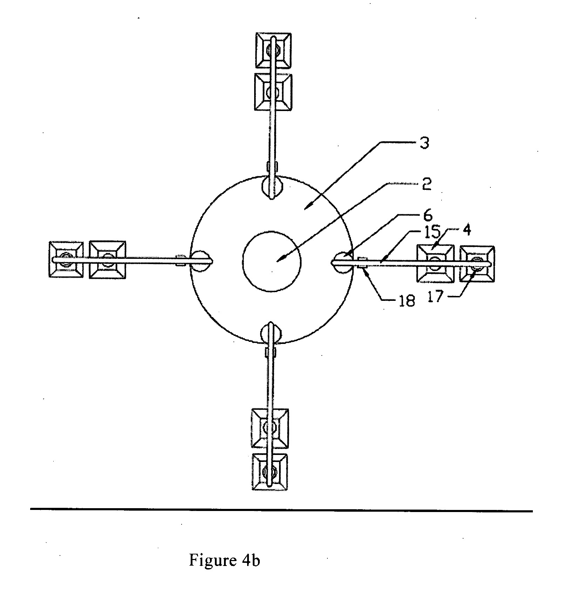

Figures 4a and 4b represent the example 4 of this invention. As it can be seen, the power generation device of example 4 according to the invention comprises lifting device and power-generating unit.

Wherein, the lifting device includes: drive motor 1, stationary axis 2 and rotation platform 3, which have the same structures and position relations as that of the corresponding components in example 1.

The lifting device further includes the first magnet body 5 which consists of four magnets having the same shape fixedly arranged on an identical circumference of the rotation platform 3 at equal interval.

The lifting device further includes support bracket 4, second magnet body 6, oscillating piece 15 and movement body 16. The support bracket 4 is installed around the rotation platform 3, which is corresponding to the arrangement of the first magnet body 5; there is magnetic support 42 with concave part installed on the support bracket 4. The oscillating piece 15 is a lever-type oscillating piece including pipe fittings 151, a relatively smooth movement pipeline 152 is installed inside the said pipe fittings 151 and the movement body 16 can move therein; a magnetic pivot 153 is installed at the position adjacent to the center part of the pipe fittings 151, the said magnetic pivot 153 has a shape of water drop which corresponds to the shape of the concave part of magnetic support 42 and has magnetism repulsive to and size slightly smaller than that of the magnetic support 42. The lever-type oscillating piece 15 can be suspending above the support bracket 4 due to the suspension above magnetic support 42 of magnetic pivot 153. The second magnet body 6 having the magnetism repulsive to that of the first magnet body 5 is fixedly below the end, more adjacent to the rotation platform 3, of pipe fittings 151 and above the first magnet body 5. A bumper bracket 154 is installed at the other end of the pipe fittings 151; a dashpot 17 with a bumper bracket 154 inserted therein is installed at the side, far away from the rotation platform 3, of support bracket 4; there is also a stabilization bracket 155 installed above the pipe fittings 151 to stabilize the said pipe fittings 151 and prevent it from occurring swing deviation.

In addition, there is also a damper strut 18 installed between the support bracket 4 and the rotation platform 3 where is adjacent to the rotation platform. A cushion 181 is positioned above the said damper strut 18 to prevent the second magnet body 6 from going down overly to impact the rotation platform 3.

Metal coil 10 of the power-generating unit is installed in pipe wall of lifting channel 9; magnet 11 is installed in the movement body 16.

Meanwhile, magnet 11 or metal coil 10 in the power-generating unit is also installed on wall of the dashpot 17; the bumper bracket 154 is installed with metal coil 10 or magnet 11 in the power-generating unit, correspondingly.

The said power-generating unit further includes cable 12 connected with the metal coil 10 which transports generated power outside.

The working process of the power generation device of the said example is described as follows.

At initial position, four second magnet bodies 6 are placed at the identical horizontal plane. The drive motor 1 is started up to rotate the rotation platform 3, in turn drives the first magnet body 5 which is fixed on the rotation platform 3 to rotate. When the rotating first magnet 5 cuts in the position below the second magnet body 6 which is suspended above it, the repulsive force between the two magnets brings the second magnet body 6 up, in turn brings the end installed with the second magnet body 6 of the oscillating piece 15 up, the said oscillating piece 15 swings up and down vertically about a pivot, the other end point of which goes down and drives the bumper bracket 154 to move up and down vertically inside the dashpot 17, so as to ensure that the suspended pipe fittings 153 swings left and right vertically at a uniform set speed which provides the movement body 16 and bumper bracket 154 with movement potential energy. When movement pipeline 152 inside the oscillating piece 15 is in heeling condition, the movement body 16 installed inside the movement pipeline 152 starts to move along it by the function of gravity, that is to say, metal coil 10 installed in pipe wall of lifting channel 9 moves relative to magnet 11 installed in movement body 16 to produce power, and the generated power is transported to public grid through cable 12. At the same point, the bumper bracket 154 moves inside the dashpot 17 to produce power also.

When the rotation platform 3 rotates and drives the first magnet body 5 to leave the second magnet body 6, one end of the oscillating piece 15 adjacent to the rotation platform 3 goes down by the function of gravity, the other end which is far away from the rotation platform 3 goes up. When its lifting channel 152 inclines in a contrary direction, the movement body 16 does reverse movement and produces power again which is transported to public grid. The process repeats in cycle.

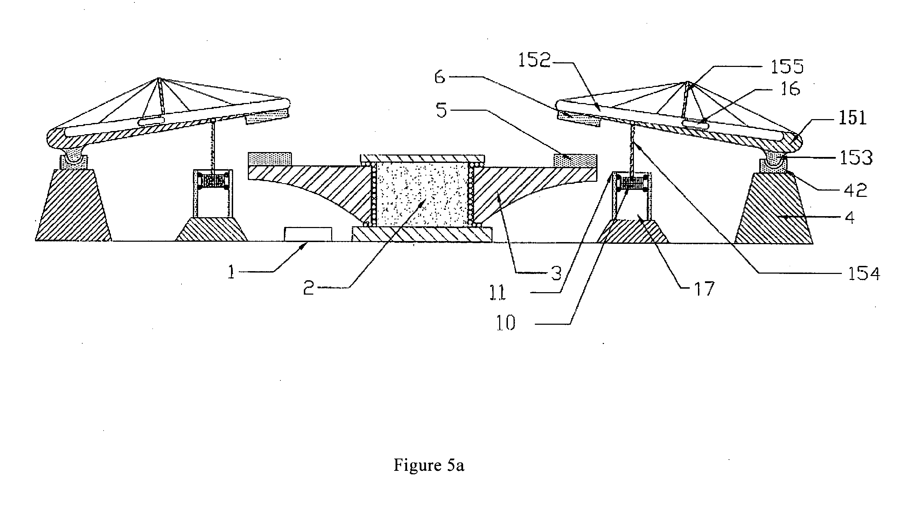

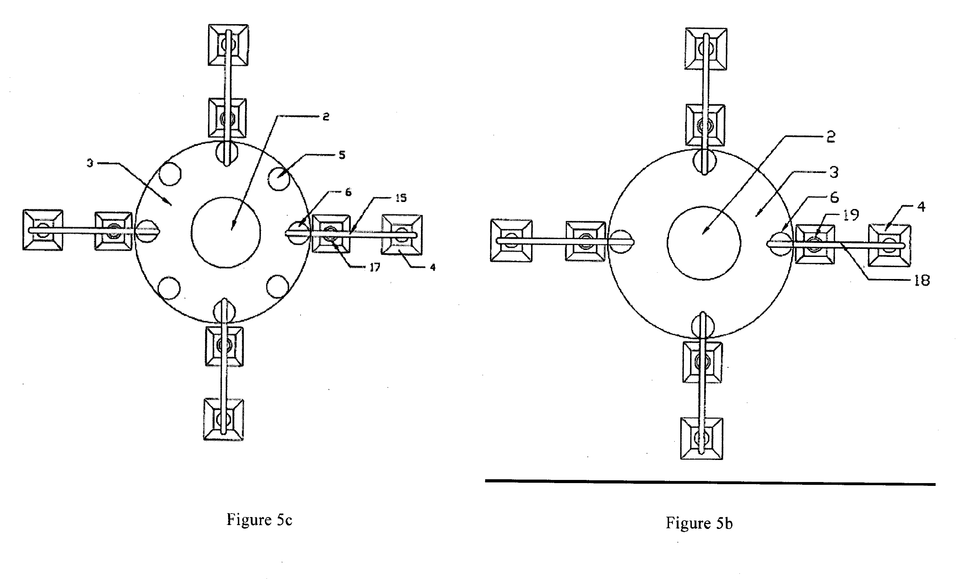

Figures 5a, 5b represent the power generation device according to example 5 of the invention. Both the basic structure and working principle of the said power generation device are same as that in example 4. The difference is only in that: the magnetic pivot 153 of the lever-type oscillating piece 15 is installed at the end of pipe fittings 151 which is far away from the rotation platform, and the bumper bracket 154 is installed at lower part of the lever-type oscillating piece 15 at a position adjacent to the center of the lever-type oscillating piece 15. As the magnetic pivot 153 is setup at the position adjacent to the rotation platform, there is no need to setup damper strut 18 and cushion 181.

Figures 5c, 5d represent the other two forms of layout of the first magnet body 5 of power generation device of example 5 of this invention. In Figure 5c, the first magnet body 5 includes six magnets arranged on an identical circumference of rotation platform 3 at equal interval; while the first magnet body 5 includes three magnets arranged on an identical circumference of rotation platform 3 at equal interval in Figure 5d.

Please refer to Figures 6a to 6d. As it can be seen, the power generation device of example 6 of the invention comprises lifting device and power-generating unit.

Wherein, the lifting device comprises: drive motor 1, stationary axis 2 and rotation platform 3 which can rotate about the stationary axis 2 by the drive motor 1; there are roll balls installed between the rotation platform 3 and the stationary axis 2 so as to reduce pivoting friction of the rotation platform 3. The first magnet body 5 includes three magnets having the same shape which are fixed on an identical circumference on the upper plane of the rotation platform 3 at equal interval.

The said lifting device further includes support bracket 4, second magnet body 6, movement body 16 and oscillating piece 15. The support bracket 4 is installed at the upper part of stationary axis 2 of rotation platform 3 and setup with magnetic support 42 with concave part. Oscillating piece 15' is a disc-type oscillating piece which has a diameter corresponding to that of rotation platform 3. The disc-type oscillating piece 15' includes pipe fittings 151' which are arranged as rings. A relatively smooth movement pipeline 152' is installed inside the said pipe fittings 151' and the movement body 16 can move therein; there is a disc-type stabilization bracket 155' installed on the ring-type pipe fittings 151', the said disc-type stabilization bracket 155' is setup with a magnetic pivot 153' shaped as water drop at the center of its lower part. The said magnetic pivot 153' has the shape corresponds to, the magnetism repulsive to, and the size slightly smaller than, that of the concave part of magnetic support 42, so as to form magnetic suspension. The way of arrangement of the magnetic pivot 153' and magnetic support 42 enables the disc-type oscillating piece 15' suspending above the support bracket 4. The second magnet body 6 includes two magnets positioned below the pipe fittings 151' symmetrically with respect to the center of the disc-type stabilization frame 155', and locates above the rotation track of the first magnet body 5 and has the magnetism repulsive to that of second magnet body 6.

In the said lifting device, there is a damper strut 18' positioned at the external side of rotation platform 3, the said damper strut 18' has a buffer platform 182' extending to the position between rotation platform 3 and disc-type oscillating piece 15', the said buffer platform is installed with a cushion 181' so as to prevent the said disc-type oscillating piece 15' from dropping down overly to impact the rotation platform 3.

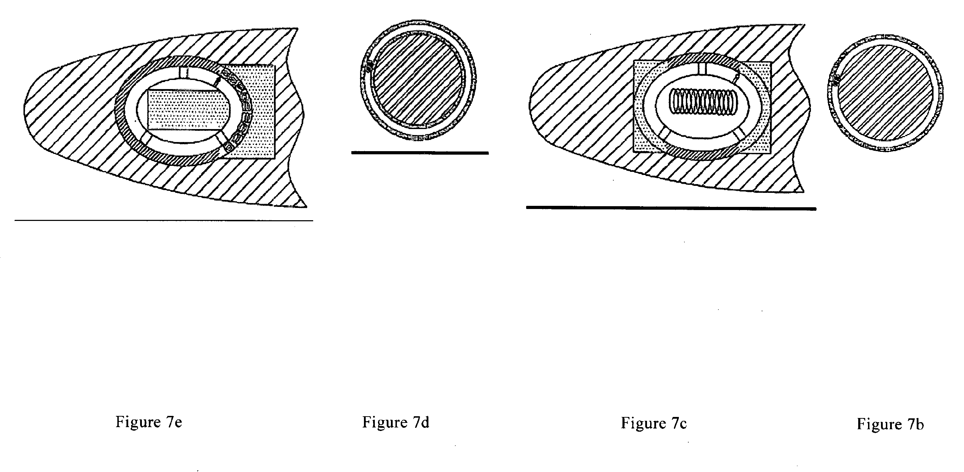

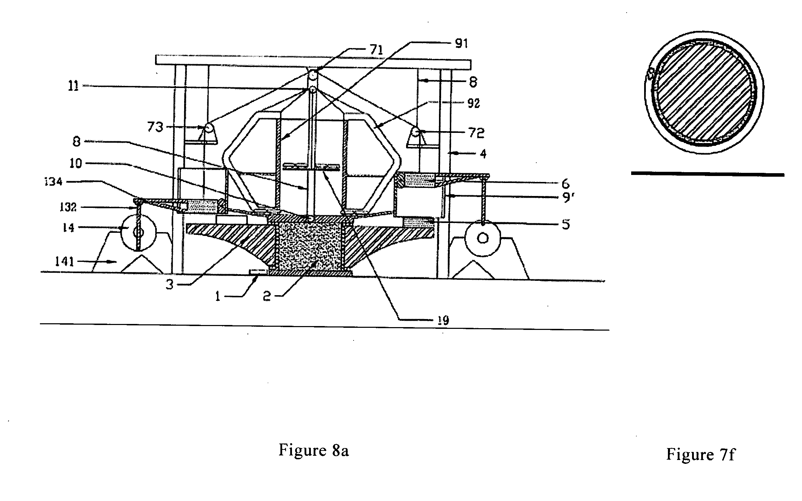

The power-generating unit comprises metal coil 10, magnet 11 and cable 12. As it can be seen from Figures 7a and 7f, there are several forms of layout of the metal coil 10 and magnet 11 for power generation. As it can be seen from Figures 7a and 7b, metal coil 10 is setup in movement body 16, magnet 11 is setup in external pipe wall of movement pipeline 152'. Or else, as it can be seen from Figures 7c and 7d, metal coil 10 is setup in movement body 16, magnet 11 is setup in external and inner pipe wall of movement pipeline 152' or in inner-side pipe wall of movement pipeline 152' as in Figures 7e and 7d. Through a trolleybus-style sliding track buckle-grasps (not shown), the metal coil of movement body 16 is connected with cable 12 which transports generated power to public grid.

The working process of the power generation device of the said example is described as follows.

At initial position, four second magnet bodies 6 are placed at an identical horizontal plane. The drive motor 1 is started up to rotate the rotation platform 3, in turn drives the first magnet body 5 which is fixed on the rotation platform 3 to rotate. When the rotating first magnet 5 cuts in the position below the second magnet body 6 which is suspended above it, the repulsive force between the two magnets brings the second magnet body 6 up, in turn brings the part of the oscillating piece 15' which is installed with the second magnet body 6 up, the said oscillating piece 15' swings up and down vertically about magnetic pivot, the other side of oscillating piece 15' which is opposite to the one installed with the second magnet body 6 goes down. When movement pipeline 152' inside the oscillating piece 15' is in heeling condition, the movement body 16 installed inside the movement pipeline 152' moves along it by the function of gravity, that is to say, metal coil 10 installed inside the pipe wall of movement pipeline 152' moves relative to magnet 11 installed in movement body 16 to produce power, the generated power is transported outside through cable 12.

When the rotation platform 3 rotates and drives the first magnet body 5 to leave the second magnet body 6, one end of the oscillating piece 15 adjacent to the rotation platform 3 goes down by the function of gravity, the other end which is far away from the rotation platform 3 goes up. When its lifting channel 152 inclines in a contrary direction, the movement body 16 does reverse movement and produces power again which is transported to outside. The process repeats in cycle.

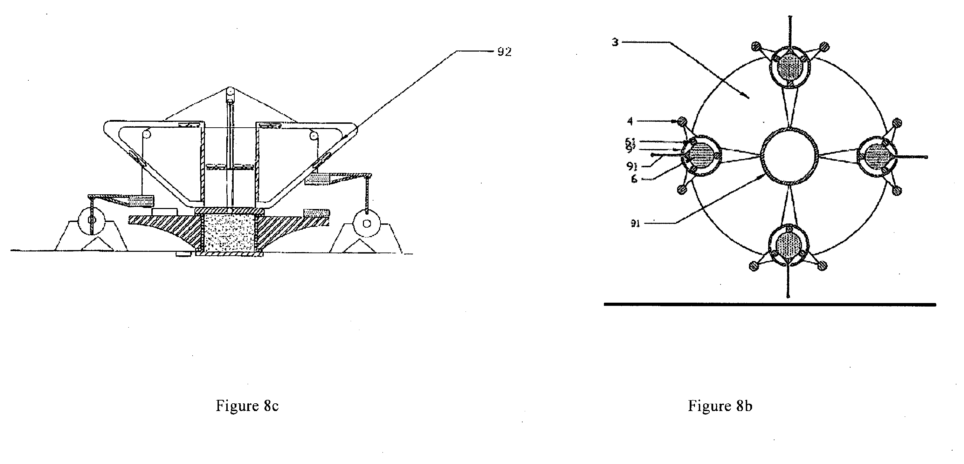

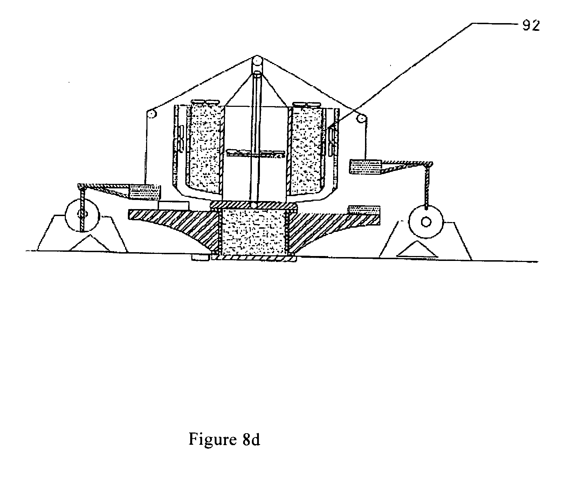

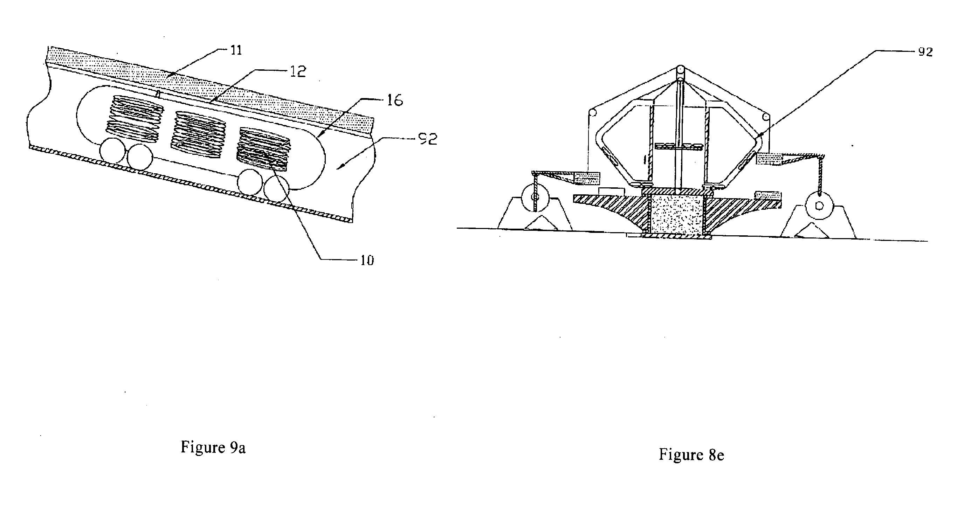

As shown in Figures 8a to 8e, the power generation device according to example 7 of the invention comprises lifting device and power-generating unit.

Wherein, the lifting device comprises: drive motor 1, stationary axis 2 and rotation platform 3 which can rotate about the stationary axis 2 by driving from the drive motor 1; there are roll balls installed between the rotation platform 3 and the stationary axis 2 so as to reduce pivoting friction of the rotation platform 3. The first magnet body 5 includes three magnets having the same shape which are fixed on the external circumference of the rotation platform 3 at equal interval.

The said lifting device further includes support bracket 4, second magnet body 6, pulley block 7, rope 8, lifting channel 9 and movement body 16. The support bracket 4 is positioned around the rotation platform 3; the pulley block 7 is setup on the support bracket 4. The said pulley block 7 includes pulley reversing mechanism 71 positioned rightly above the rotation platform 3, fixed pulleys 72, 73 are fixed on the support bracket 4 symmetrically relative to the pulley reversing mechanism 71. The rope 8 rounds the fixed pulleys 72, 73 as well as pulley reversing mechanism 71 and has a lower end connected to the second magnet body 6, while the other end of the rope 8 goes around the pulley reversing mechanism 71, and the pulley reversing mechanism 71 is connected with disc-shaped lifting stand 19. The lifting channel 9 includes cylindrical upstream channel 91 and bow-shaped downlink channel 92. The said bow-shaped downlink channel 92 with relatively smooth inner wall is installed at the side of upstream channel 91; the upstream channel 91 has an upper opening leading to the upper opening of downlink channel 92 and a lower opening connecting with the lower opening of downlink channel 92. The lifting stand 19 can move up and down inside the cylindrical upstream channel 91. The movement body 16 can move downward along the downlink channel 92.

Figures 8c to 8d represent several forms of layout of downlink channel 92 of the power generation device in Figure 8a.

The power-generating unit comprises metal coil 10, magnet 11 and cable 12.

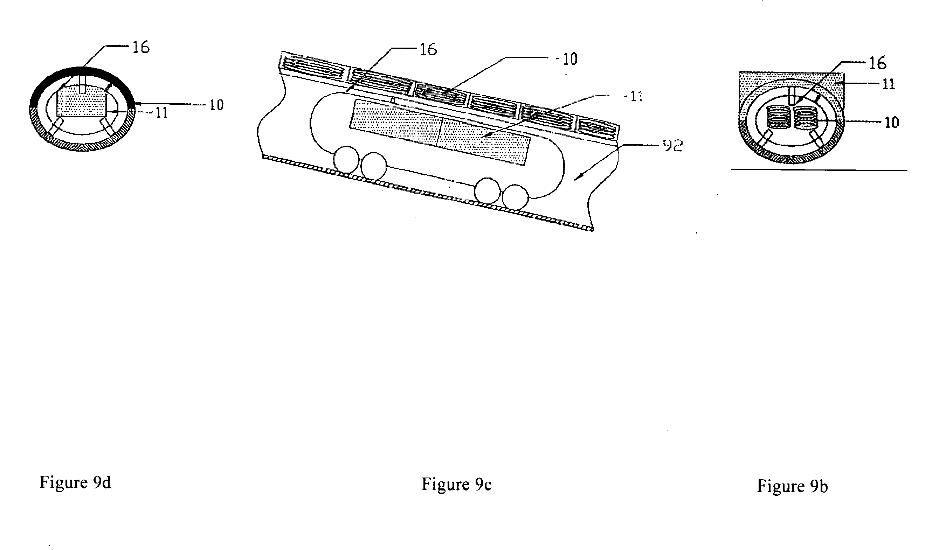

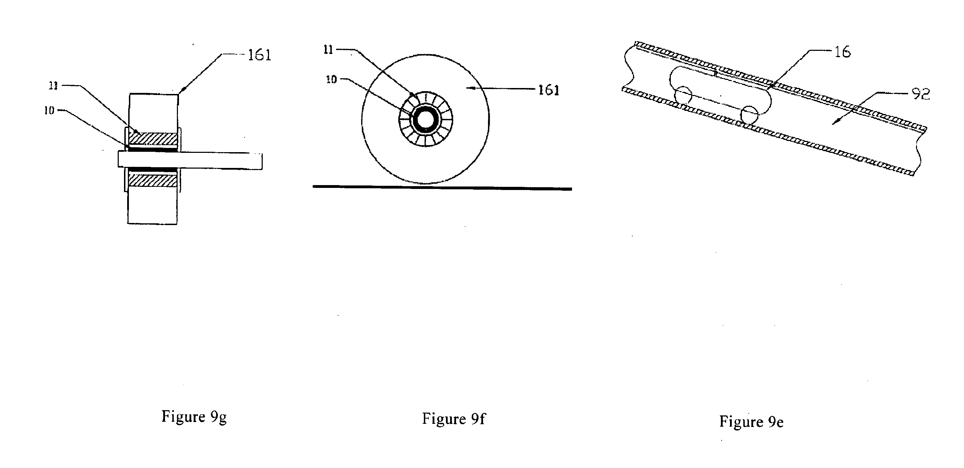

Figures 9a to 9g represent several forms of layout of metal coil 10 and magnet 11 of the power generation device in Figure 8a. As shown in Figures 9a to 9g, the movement body 16 is setup with wheels 161. Metal coil 10 and magnet 11 for power generation can be arranged as the following three forms: as shown in Figures 9a and 9b, metal coil 10 is installed inside the movement body 16, magnet 11 is installed in pipe wall of upstream channel 91; as shown in Figures 9c and 9d, metal coil 10 is installed in pipe wall of the upstream channel 91, magnet 11 is installed in the movement body 16; as shown in Figures 9e, 9f and 9g, metal coil 10 is installed on the wheel axle, and magnet 11 is installed on the wheel hub.

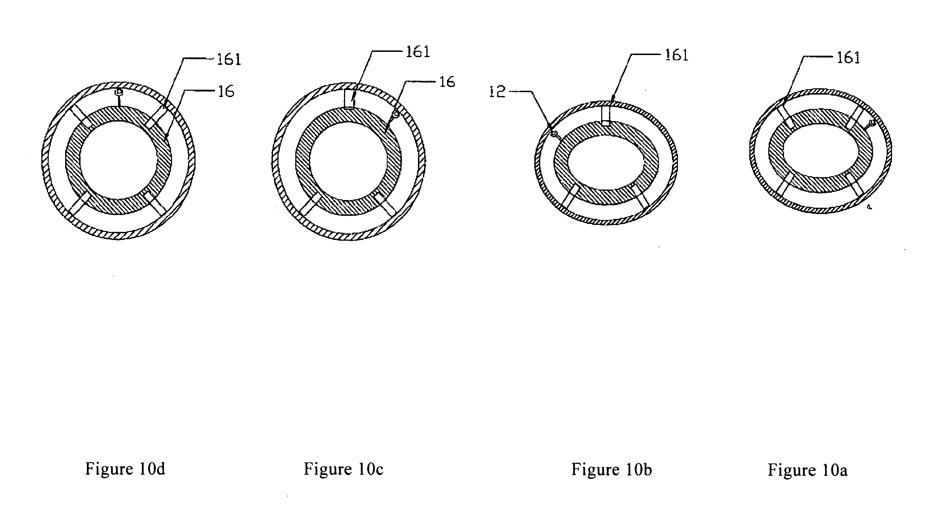

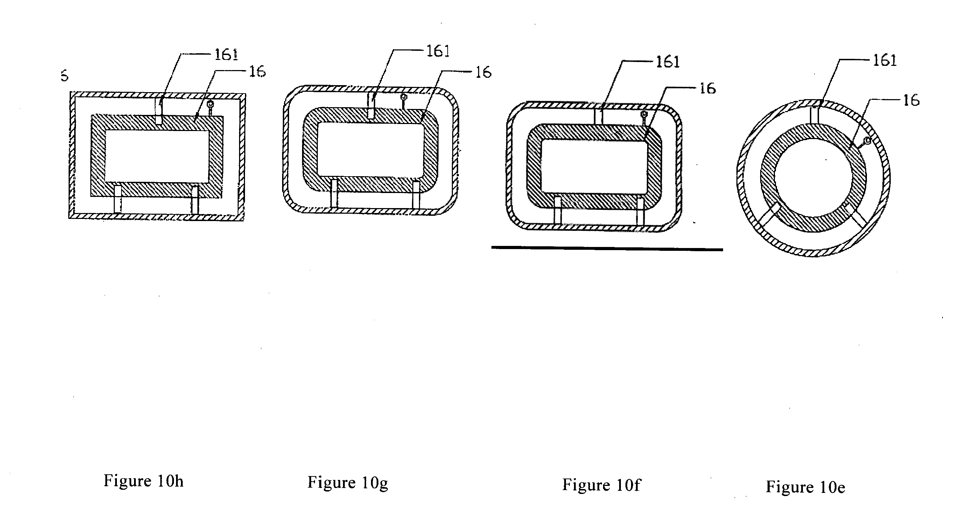

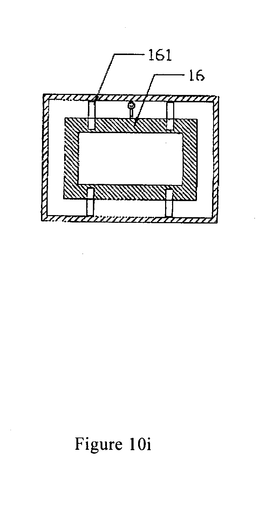

Figures 10a to 10i represent several available structures of movement body 16 and downlink channel 92 of the power generation device shown in Figure 8a.

The working process of the said example is as follows.

At initial position, two second magnet bodies 6 are placed at an identical horizontal plane; movement body 16 stays at the upper opening of the downlink channel 92.

Meanwhile, the movement body 16 is driven to move downward along the upstream channel 91 by tiny force. As metal coil 10 and magnet 11 can be arranged according to any one of the three forms of layout mentioned above, there is electromagnetic induction occurring between the metal coil 10 setup in movement body 16 and magnet 11 during the process of movement body 16 moving downward along the upstream channel 91, so as to produce power. The generated power is transported to the cable 12 installed at inner side of pipe wall of the downlink channel 92 through elastic buckle-grasping sliding wheel 161 connected with metal coil 10, and then to public grid through the cable 12. When the movement body 16 moves to lower end of the downlink channel 91, it's driven to reverse and moves from the lower opening of the downlink channel 92 into the lifting stand 19 which is just connected to the lower opening. At this point, the drive motor 1 is started up to rotate the rotation platform 3, in turn drives the first magnet body 5 which is fixed on the rotation platform 3 to rotate. When one of the rotating first magnet body 5 cuts in a position below one of the second magnet body 6 which is suspended above it, the repulsive force between them brings the second magnet body 6 up and the other second magnet body 6 down, the up and down movements of the two second magnet bodies 6 drives rope 8, in turn brings the lifting stand 19 up by the pulley reversing mechanism 71; the movement body 16 is lifted up along the upstream channel 91 until it reaches the upper opening of the upstream channel 91, at this point, the lifting stand 19 connects to the upper opening of the downlink channel 92; at the same time, the movement body 16 is driven to move into the upper opening of the downlink channel 92 by control and move downward again to produce power. During the process of movement body 16 moving downward along the upstream channel 91 again, the second magnet body 6 leaves the first magnet body 5, the lifting stand 19 goes down by the function of its gravity until it reaches the bottom of the upstream channel 91 and connects to the lower opening of the downlink channel 92. The movement of movement body 16 repeats in cycle.

As the speed of up-down circulation of the second magnet body 6 is faster than that of movement body 16, during one up-down circulation of movement body 16, the second magnet body 6 has finished several ones. Therefore, the said power generation device is further installed with another set of lifting device and power-generating unit to prevent from wasting kinetic energy produced by the second magnet body 6.

Specifically, the power-generating unit of the said example further includes generator 14. Correspondingly, in the lifting device, lifting channel 9' is positioned around the second magnet body 6. The second magnet body 6 can slide up and down along the inner wall of lifting channel 9' through roller wheel 61. The second magnet body 6 further connects with member bar group 13' which includes vertical rod 132"and link bracket 134, the second magnet body 6 is clamping connected to one end of the link bracket 134 whose another end fixed with the vertical rod 132" whose another end connected the rotor of the power generator 14.

By adopting the said structure, during the process of movement body 16 moving downward, as the first magnet body 5 rotates continually, the second magnet body 6 finishes several up-down circulations which drives the link bracket 134, in turn brings the vertical rod 132" up and down, thereby rotates the rotor of power generator. The process repeats and produces power in cycle.

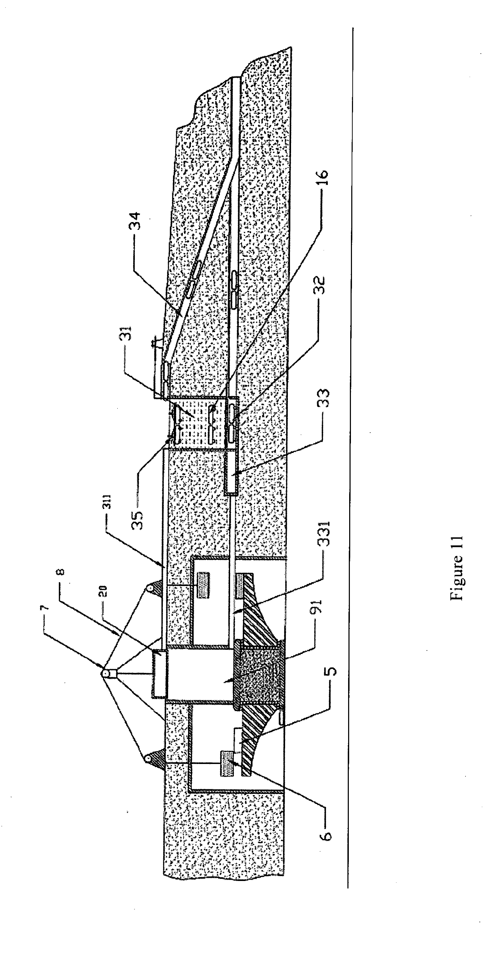

Figure 11 represents example 8 according to the invention. The power generation device of example 8 of the invention comprises the lifting device and the power generation mechanism in example 7. In the present example, the lifting stand of the said lifting device is installed with water tank 20 with a valve. The power generation mechanism in the present example comprises liquid chamber 31, shift device 32, discharge device 33, waterless pipeline 34, movement body 16 and power-generating unit.

Liquid chamber 31 is a cube container for storing certain amount of water. The shift device 32 is installed at the lower part of the liquid chamber 31 with the upper trap door, air hole and side trap door. The upper trap door can be opened or closed so as to make the liquid chamber 31 connect to or separate from the shift device 32. The side trap door can be opened or closed so as to make the shift device 32 connect to or separate from the waterless pipeline 34. The discharge device 33 is installed at one side of or under the shift device 32 with a capacity larger than that of the shift device 32.

The discharge device 33 has discharge hole leading to the shift device 32, the liquid in the shift device 32 can enter into the discharge device 33 through the discharge hole. The discharge device 33 further comprises the discharge pipe 331 whose end leads to upstream channel 91, in turn to the valve of water tank 20, so as to timely discharge the liquid discharged from the shift device 32 into the lifting water tank 20 and prepare for the next liquid discharge. The discharge device 33 also has air hole (not shown).

During the process of power generation, liquid in the discharge device 33 is pumped into the lifting water tank 20 at the bottom of the upstream channel 91 through the discharge pipe 331 to drive the first magnet body 5 to rotate, when the first magnet body 5 moves to the position below the second magnet body 6, the second magnet body 6 fixed to the rope 8 is driven to go up by the repulsive force from the same magnetism of the two magnets, which rotates the pulley block 7 through rope 8, in turn brings the lifting water tank 20 up. The lifting water tank 20 is lifted until it connects with the liquid inlet pipeline 311, at this point, the valve setup at one side of the lifting water tank 20 is opened by control, liquid therein flows back into the liquid chamber 31 through the liquid inlet pipeline 311 to ensure sufficient quantity of liquid in the liquid chamber 31, thus ensure that the power generation device works in cycle.

The waterless pipeline 34 is installed at external side of the liquid chamber 31 which includes upward delivery pipeline, downlink pipeline descending from high to low, as well as downward delivery pipeline. The upward delivery pipeline has one end connected to the upper opening of the liquid chamber 31 with the delivery sliding device installed thereon and the other end connected to the beginning end of the downlink pipeline which is installed underground the side of the liquid chamber 31; the terminal end of the downlink pipeline connects to one end of the downward delivery pipeline whose the other end connected to side trap door of the shift device 32. Each of the pipelines is installed with smooth track therein (not shown); the movement body 16 moves along the track of waterless pipeline 34.

The buffer drive device 35 is placed at the set location in liquid chamber 31 to buffer the speed of movement body 16 at the moment it ascends to the water surface. The buffer drive device 35 includes buffer board, balance frame 472 set up on the buffer board, sprocket column 473 set up between the balance frames 472. A power generator can be arranged above the liquid chamber 31, so that sprocket column 473 can engagement with the motor rotating toothed wheel of the power-generating unit 44 to produce power by transferring the ascending kinetic energy into electric power.

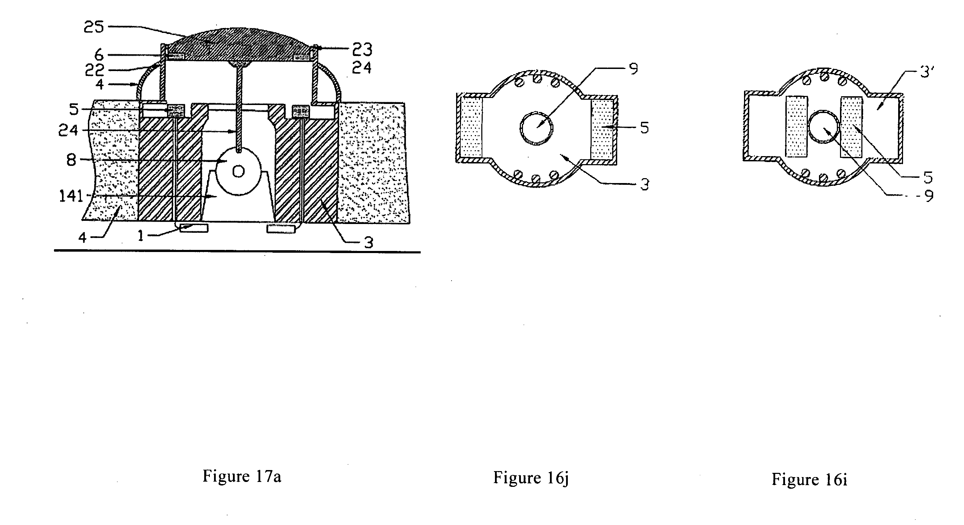

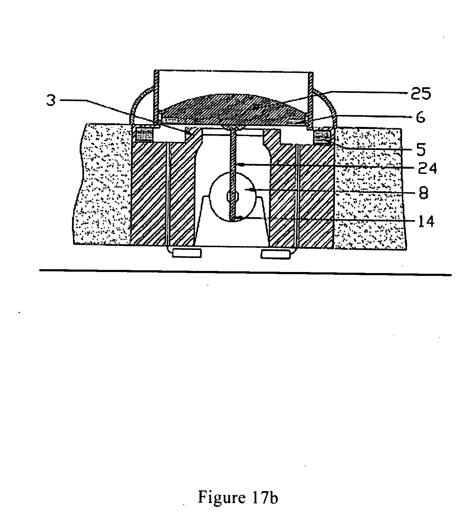

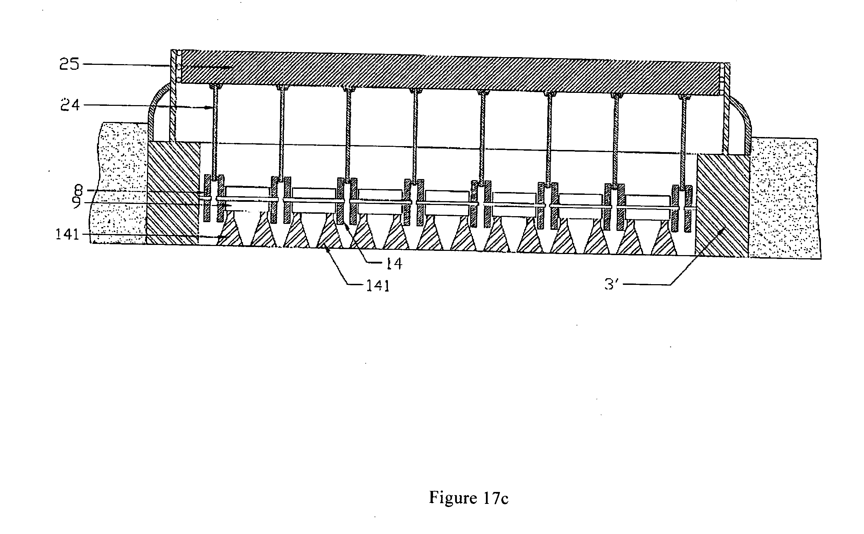

The power-generating process in this example can be divided into two parts; those are the process of power generation by descending movement of movement body 16 in waterless pipeline 34 and the process of power generation by ascending movement of movement body 16 in liquid chamber 31. Movement body 16 is hollow oblate sphere with rotating wheel 161 whose floatage is greater than its gravitation. As shown in Figure 17a, magnet 11 for power generation is installed in inner wall of downlink pipeline, metal coil used for power generation is installed in the movement body 16, and cable 12 is connected to the coil 10 to transport the generated power outside. The coil can be installed in inner wall of downlink pipeline and the magnet 11 installed in movement body 16, alternatively. Besides, the coil and magnet installed in rotating wheel 161 are also doable. The ascending power-generating unit comprise power-generating unit (not shown) installed above the liquid chamber 31 and buffer transmission device 35.

About the specific working principle of the said example, please refer to another patent application PCT/CN2006/002239 by the identical applicant.

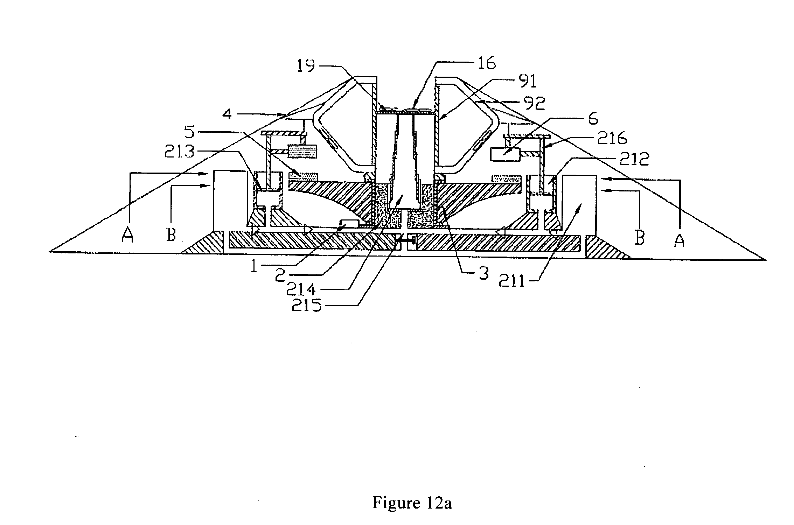

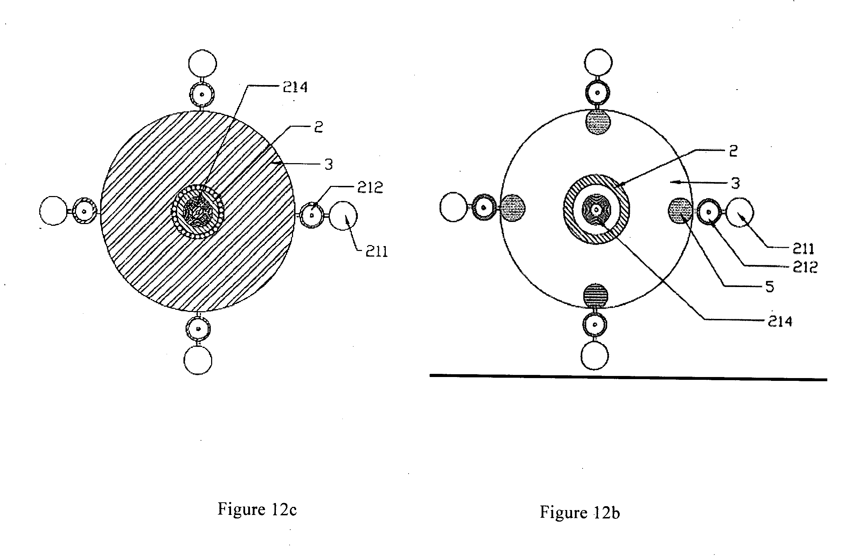

As shown in Figures 12a to 12c, the power generation device according to example 9 of the invention comprises lifting device and power-generating unit.

Wherein, the lifting device comprises: drive motor 1, stationary axis 2 and rotation platform 3 which can rotate about the stationary axis 2 by driving from the drive motor 1; there are roll balls installed between the rotation platform 3 and the stationary axis 2 so as to reduce pivoting friction of the rotation platform 3. The first magnet body 5 includes four magnets having the same shape which are fixed on the external circumference of the rotation platform 3 at equal interval.

The said lifting device further includes support bracket 4, second magnet body 6, movement body 16 and hydraulic lifting device 21. The support bracket 4 is installed around the rotation platform 3; the hydraulic lifting device 21 includes liquid reservoir 211, hydraulic cylinder 212, piston 213 positioned inside the said hydraulic cylinder 212, extension sleeve 214, as well as lifting stand 19 fixed on the upper top of the extension sleeve 214. The liquid reservoir 211, hydraulic cylinder 212 and extension sleeve 213 are connected with each other through hydraulic pipeline 215. Both structures and ways of arrangements of the upstream channel 91, downlink channel 92 and movement body 16 are same as that in example mentioned above. The second magnet body 6 fixed together with piston 213 by a connection pod 216 is placed above the track of the first magnet body 5 and has the magnetism repulsive to it. The extension sleeve 214 is installed in the stationary axis 2. When the extension sleeve 214 is in the station of contraction, the lifting stand 19 installed thereon connects to the lower opening of the upstream channel 91.

The working process of the power generation device of the said example is as follows.

At initial position, two second magnet bodies 6 are placed at an identical horizontal plane and far away from the first magnet body 5; movement body 16 is placed on the lifting stand 19 which connects to the upper opening of the downlink channel 92.

The movement body 16 moves by control into the upper opening of downlink channel 92; then the said movement body 16 moves downward along the downlink channel 92 by tiny force; metal coil 10 moves relative to magnet 11 and produces power which is transported to public grid through cable 12. At the same time, the drive motor 1 is started up to rotate the rotation platform 3, in turn drives the first magnet body 5 fixed on the rotation platform 3 to rotate. When the rotating first magnet 5 cuts in the position below the second magnet body 6 which is suspending above it, the repulsive force between them brings the second magnet body 6 up, thus release push force onto piston 213; as the gravity of the lifting stand 19 and the extension sleeve 214 is greater than the push force from hydraulic liquid, they go down gradually and the hydraulic liquid flow back, until the lifting stand 19 moves to reach the bottom of the upstream channel 91 so as to connects to the lower opening of the downlink channel 92. When the movement body 16 moves to the lower end of the upstream channel 91, it is driven to move into the lifting stand 19 by control, and at the same time, the first magnet body 5 is just rotates to leave the second magnet body 6 by control. Then the second magnet body 6 which gets rid of the repulsive force goes down by function of gravity, and pushes the piston 213. fixed together with it to move down. The hydraulic liquid are contracted and push the extension sleeve to extend, in turn to push the lifting stand 19 to go up with the movement body 16 until it reaches the position connected to the upper opening of downlink channel 92. At this point, the movement body 16 is driven into the downlink channel 92 and repeats previous process. The whole process repeats in cycle which produces power.

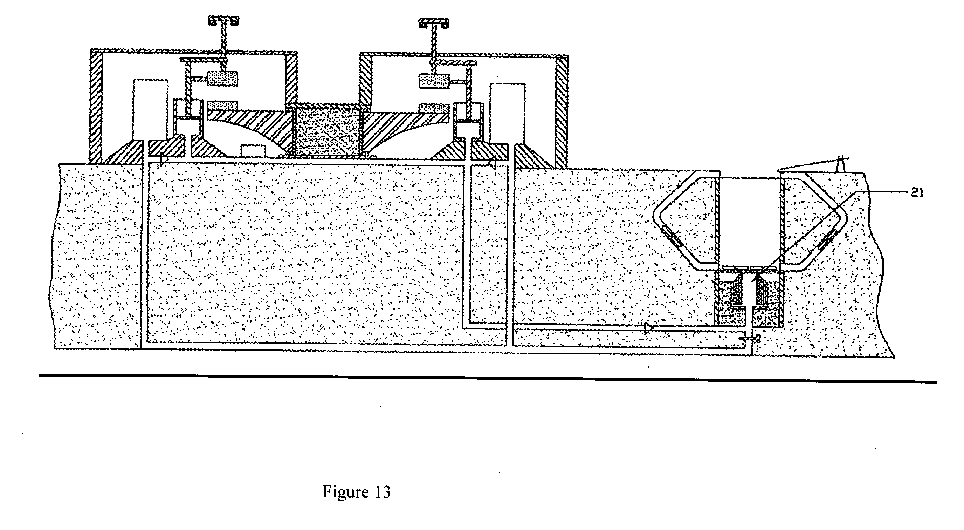

Figure 13 represents the power generation device according to example 10 of the invention whose structure is basically same as that of example 8. The difference is only in that: the lifting channel 22, upstream channel 91 and extension sleeve 214 of hydraulic lifting mechanism 21 of the present example are installed underground.

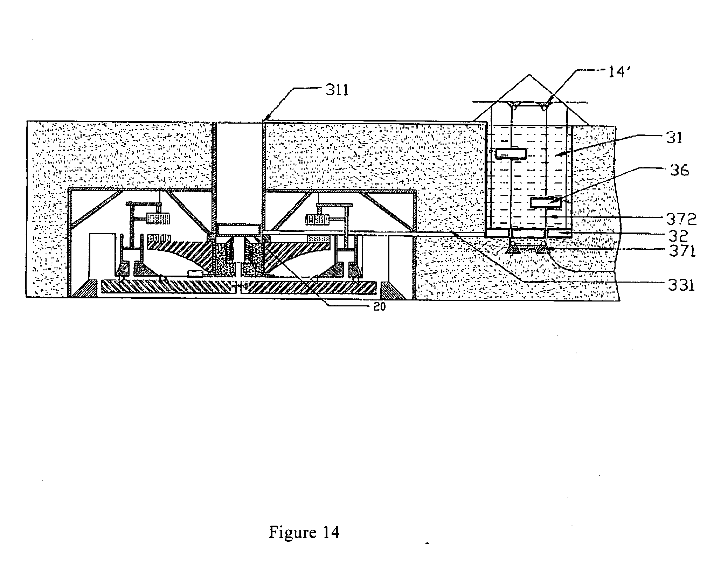

Figure 14 represents the power generation device according to example 11 of the invention which comprises the lifting device and power generation mechanism in example 9. In the present example, the lifting stand of the said lifting device is replaced by the lifting water tank 20 with valve. The power generation mechanism in the present example comprises liquid chamber 31, shift device 32, discharge device 33, waterless pipeline 34, tank 36 and power-generating unit.

Liquid chamber 31 is a cube container for storing certain amount of water.

The shift device 32 is installed at the lower part of the liquid chamber 31, with the upper trap door and air hole (not shown). The upper trap door installed with liquid inlet hole and first through hole at its upper part separates the liquid chamber 31 from the shift device 32.

The discharge device 33 is installed under the shift device 32 with a capacity larger than that of the shift device 32. The discharge device 33 has discharge hole (not shown) leading to the shift device 32, the liquid in the shift device 32 can enter into the discharge device 33 through the discharge hole. The discharge device 33 further comprises the discharge pipe 331 whose end leads to upstream channel 91, in turn to the valve of water tank 20, so as to timely discharge the liquid discharged from the shift device 32 into the lifting water tank 20 and prepare for the next liquid discharge. The discharge device 33 also has air hole. The lifting water tank 20 is lifted up by the lifting device, and then the liquid in it are re-pumped into the liquid chamber 31 for use through water pump and liquid inlet pipeline 311 so as to ensure that the power generation device works in cycle.

The tank 36 includes two hollow tanks each with several liquid in-out openings 364 that can be opened/closed installed thereon, wherein, the location of the lower liquid in-out opening corresponds to the location of liquid inlet opening installed on the upper trap door. The relationship between gravitation and flotage of the tank 36 can be changed through filling liquid to its hollow part or discharging liquid from it to convert kinetic energy into electric energy by doing descending and ascending movements in liquid chamber 31 continuously to generate power.

There are two rows of pulley block 37 installed under the liquid chamber 31 and two rows of power generator unit 14' above the liquid chamber 31 both corresponding to the said two hollow tanks 36. The amount of the power generator unit 14' is the same as that of pulley block 37. The said pulley block 37 includes pulley and toothed belt; correspondingly, a plurality of fixing parts and second through holes are installed on the tank 36. The positions of the first and second through holes are corresponding to each other, respectively. The pulley is fixed under the liquid chamber 31. The toothed belt whose upper end rounds the motor wheel and lower end passes through the first and second through holes goes around the said pulley positioned under the liquid chamber 31 to form an approximate rectangle. The said tank 36 is fixed at one vertical edge of the said approximate rectangle by fixing component. The movement of the tank 36 is transported to the motor wheel in each power-generating unit though the pulley block 372 to drive the power-generating unit 14' to rotate for producing power.

About the specific working principle of the said example, please refer to another patent application PCT/CN2006/002239 by the identical applicant.

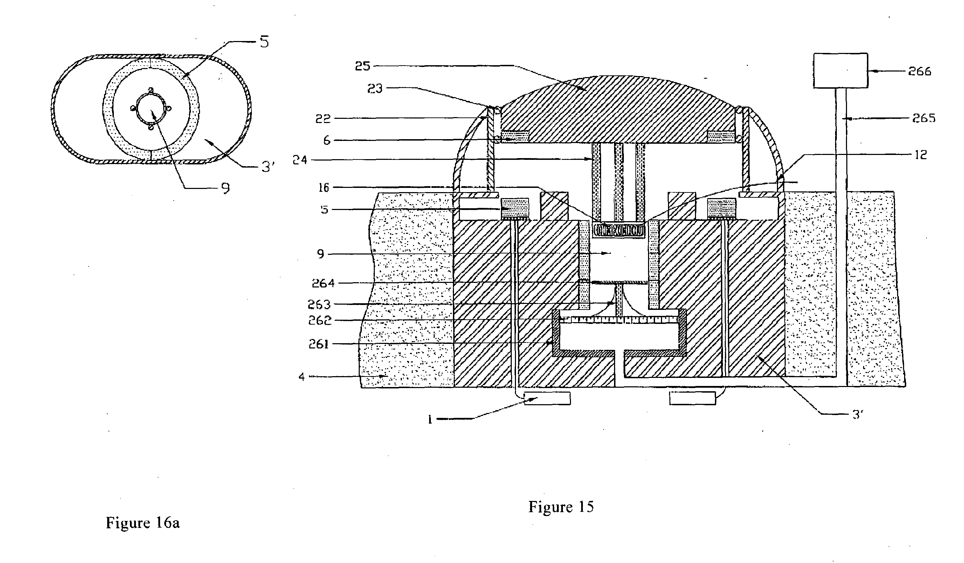

Figure 15 represents the power generation device according to example 12 of the invention. The said device comprises lifting device and power-generating unit.

Wherein, the lifting device comprises drive motor 1, support platform 3', support bracket 4, first magnet body 5, second magnet body 6, large piston 25, movement body 16, hydraulic bumper bracket 26 and lifting channel 9.

Cylindrical support platform 3' is fixedly positioned underground with circular lifting channel 9 installed at its center. Columnar setback-type cylinder block 22 is installed above the supporting platform 3'. A cover-like large piston 25 is arranged inside a smaller upper part 22a of the cylinder block 22, and may slid up and down inside the smaller upper part 22a by touching with the inner wall of the cylinder block 22 through pulley 23.

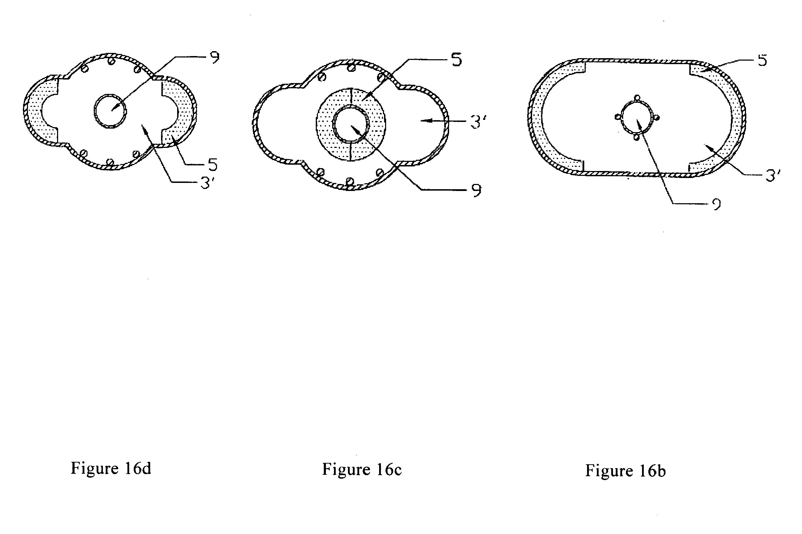

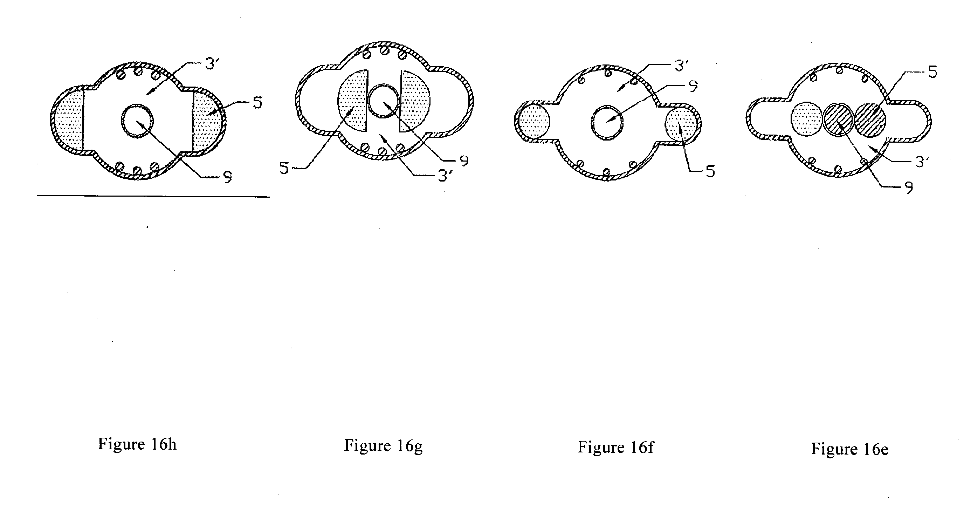

The first magnet body 5 includes two natural magnets with symmetrical shapes connected to the drive motor 1, arranged on both sides of the lifting channel 9 symmetrically and touching with the upper surface of the supporting platform 3' through roller wheel 51. The two magnets of the first magnet body 5 can do, along the upper surface of the supporting platform 3', back and forth liner movements which make them jointed to or separated from each other inside the larger lower part 22b of the columnar setback-type cylinder block 22. Figures 16a to 16j represent these jointed-separated states under five forms of layout of the first magnet body 5. The second magnet body 6 also includes two identical magnets fixed under the edge of the cover-like large piston 25 which are positioned on the tracks of the two first magnet bodies 5, respectively. The said second magnet body 6 has the position corresponding to and the magnetism repulsive to that of the closed first magnet body 5.

Hydraulic buffer device 26 includes water tank 261, water tank piston 262, bumper bracket 263 fixed on the water tank piston 262 and buffer board 264 fixed on the top of the bumper bracket 263. The said buffer board 264 penetrates into the lower part of shifting channel 9. The discharge pipe 265 is connected with the water tank 261 and the outside environment which is a water reservoir 266. The circular movement body 16 is connected to the large piston 25 at the center of its lower part through lifting rod 24 and inserted into the lifting channel 9.

The power-generating unit includes metal coil 10, magnet 11 and cable 12. The metal coil 10 is setup on the movement body 16, the magnet 11 is setup in the pipe wall of the lifting channel 9, and the cable 12 is connected with the metal coil 10 to transport the generated power to outside.

The working process of the power generation device of the said example is described as follows.

At initial position, the movement body 16 penetrates into the lower part of the lifting channel 9 and touches the buffer board 264; the two first magnet bodies 5 are separated from each other. The drive motor 1 is started up and moves the first magnet bodies 5 to joint with each other. When the moving first magnet body 5 cuts in the position below the second magnet body 6 which is suspending above it, the repulsive force between the two magnets brings the second magnet body 6 up, in turn pushes the large piston 25 up, thus brings the movement body 16 up. That is to say, metal coil 10 moves relative to magnet 11 and produces power which is transported to public grid through cable 12. When the moving first magnet body 5 moves to a position far away from the second magnet body 6 on the large piston 25, the large piston 25 goes down at a set speed by the function of gravity which presses the movement body 16 to move downward relative to the lifting channel 9. That is to say, metal coil 10 moves relative to magnet 11 and produces power which is transported to public grid through cable 12. In order to prevent the movement body from impacting onto the bottom of the lifting channel 9 and hence damaging the power generation device, a hydraulic buffer device 26 is mounted. Wherein, the discharge pipe 265 extends into the water reservoir 266. When the movement body 16 which is moving downward touches the buffer board 264, it presses the buffer board 264 and in turn presses the water tank piston 262 to move downward. At this point, as the press force acted on the buffer board 264 by the movement body is greater than the water pressure at the outlet of the discharge pipe 265, the water tank piston 262 presses the liquid in the water tank 261 and discharges them outside. When the first magnet body 5 is driven to move to a location under the second magnet body 6, the repulsive force between the two magnet bodies brings the second magnet body 6 up again, in turn brings the movement body 16 up, at this point, the press force acted on the buffer board 264 is reduced. When the said press force becomes smaller than the water pressure at the outlet of the discharge pipe 265, the liquid will flow into the water tank 261 naturally as compensation. The whole process repeats and produces power in cycle.

Figures 17a to 17c represent the power generation device according to example 13 of the invention which has the basically same structure as that in example 12. The difference is only in that: each of the support platform 3' and the cylinder block 22 is designed as a cube. The power-generating unit is generator. A plurality of generators 14 are connected to the large piston 25 at its lower part through a plurality of lifting rods 23. When the first magnet body 5 moves to leave the location corresponding to the second magnet 6, the large piston 25 which loses the support of magnetic force goes down by the function of gravity. That is to say, the generator 14 is driven to rotate by the lifting rod 23 to produce power.

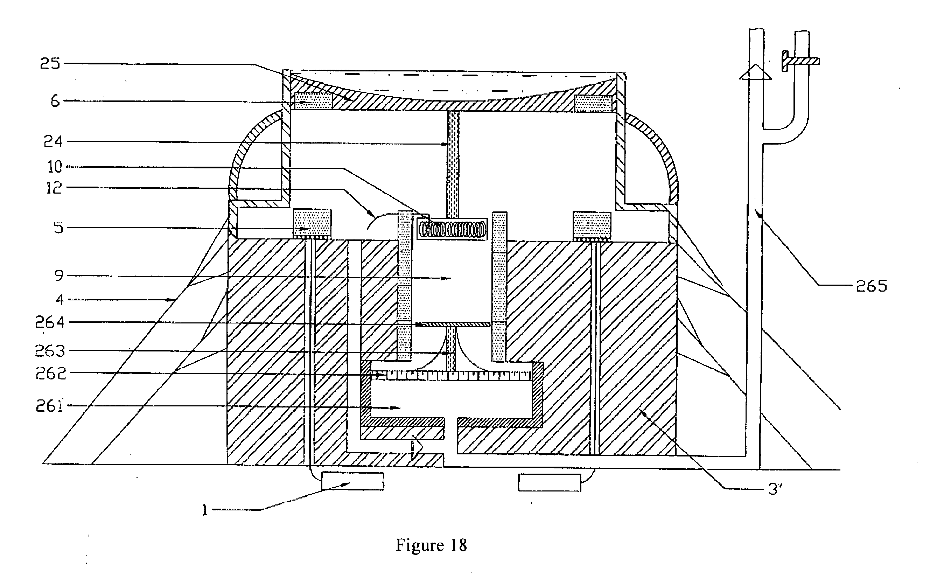

Figure 18 represents the power generation device according to example 14 of the invention whose structure is basically same as that in example 12. The difference is only in that: the said device is installed in the liquid; the large piston 25 is designed into the form of disc which can hold water. The gravitational potential energy of both the disk-type large piston 25 and the liquid in it can be used to produce power. Therefore, the power generation device should be hermetically-sealed; the large piston 25 is in the form of disk which can hold certain amount of water thereon. Instead of roller wheel, there is sealed ring or sealed liquid (not shown) set between the large piston 25 and the inner wall of cylinder block 22.

The working principle of the said power generation device is basically same as that in example 12. The difference is only in that: when the second magnet body 6 goes up by the repulsive force from the first magnet body 5, the disk-type large piston 25 holds up certain amount of seawater; when the second magnet body 6 gets rid of the repulsive force from the first magnet body 5, the large piston 25 and the seawater held thereon go down by the gravity, the movement body 16 connected with the large piston 25 through the lifting rod 24 does movement relative to the opened-closed state of the lifting channel 9 to produce power. By adopting the said structure, the manufacture material of the large piston 25 can be reduced.

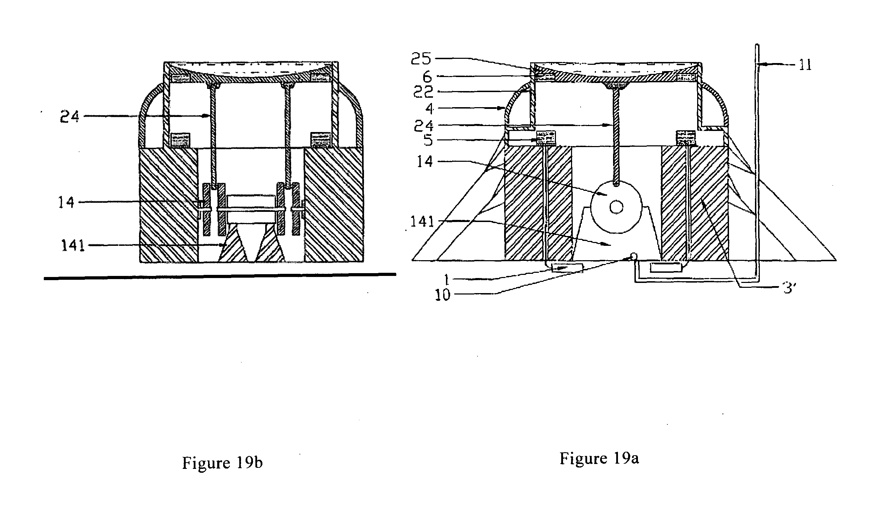

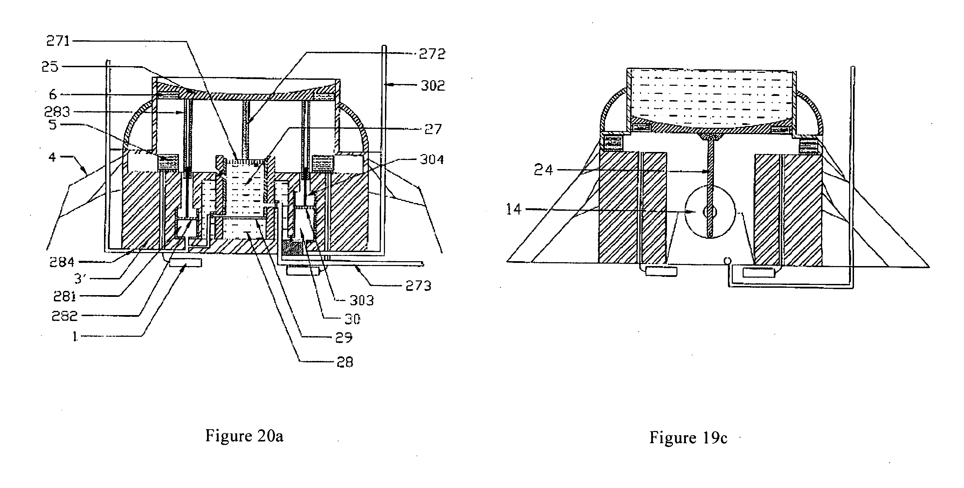

Figures 19a to 19c represent the power generation device according to example 15 of the invention whose structure is basically same as that in example 12. The difference is only in that: each of the support platform 3' and the cylinder block 22 is designed as a cube. A plurality of generators 14 are connected to the large piston 25 at its lower part through a plurality of vertical rods 24. The generators 14 are fixed on a generator bracket 141. When the first magnet body 5 moves to leave the location corresponding to the second magnet 6, the large piston 25 which loses the support of magnetic force goes down by the function of gravity. That is to say, the power generator 14 is driven to rotate by the vertical rod 24 to produce power.

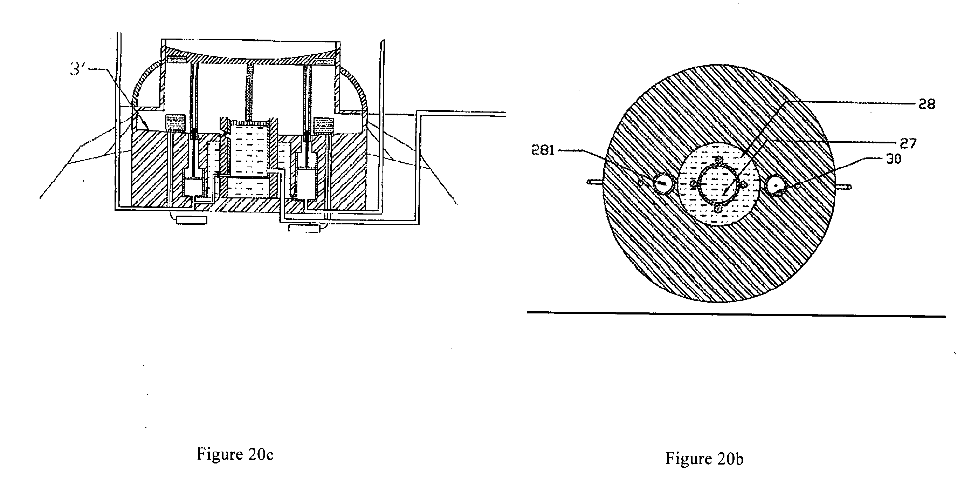

Please refer to Figures 20a and 20b, as it can be seen, the sea reverse osmosis device according to example 16 of the invention is installed in seawater (not shown) and comprises lifting device and reverse osmosis device: drive motor 1, support platform 3', support bracket 4, first magnet body 5, second magnet body 6, large piston 25, movement body 16, hydraulic bumper bracket 26 and lifting channel 9.

The structures of drive motor 1, support platform 3', first magnet body 5 and large piston 25 are basically same as those in example 3.

Circular support platform 3' and large piston 25 are fixed on the support bracket 4. The sea reverse osmosis device installed vertically at the center of the support platform 3' has a structure as follows: the osmosis chamber 27 is installed with first piston 271 therein which can swing up and down, the said first piston 271 fixedly connects with the large piston 25 through lifting rod 272; infiltration liquid discharge opening with one-way valve is installed on side wall of the sea osmosis chamber 27 so as to discharge seawater which infiltrate into the device to the osmosis chamber timely; the seawater delivery pipe 273 has one end connected to the osmosis chamber 27 and another end leading to ocean. One-way valve is setup on the said seawater delivery pipe 273 to prevent the seawater in the device from flowing back to the ocean. A reverse osmosis membrane 29 separates the freshwater reservoir 28 from the osmosis chamber 27. There is also a freshwater discharge chamber 281 installed at external side of the freshwater reservoir 28. A second piston 282 is setup in the freshwater reservoir 281 whose second link rod 283 connected with the large piston 25 through a mobile clamping-connected mechanism; the freshwater discharge pipe 284 is connected with freshwater compression chamber 281 and freshwater collecting device (not shown); a condensed water reservoir 30 leads to the lower part of the osmosis chamber 27 through condensed water transmission pipeline 301, a condensed water discharge pipe 302 connects the condensed water reservoir 30 to a condensed water collecting device (not shown). The condensed water reservoir 30 is installed with a third piston 303 therein which can moves up and down and whose third link rod 304 connected with the large piston 25 through a mobile clamping-connected mechanism.

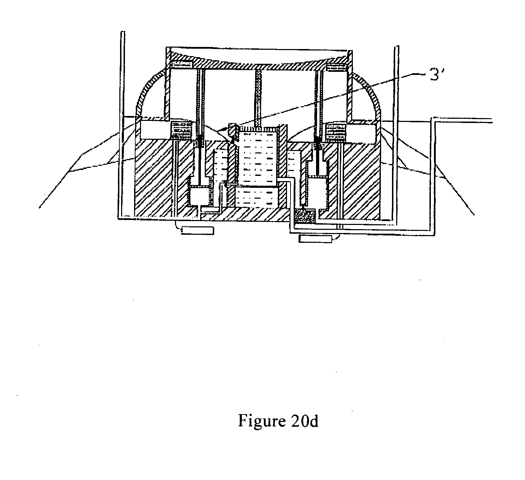

Figures 20c and 20d represent the sea reverse osmosis device according to example 16 of the invention whose structure is basically same as that in example 15. The difference is only in that: as the liquid inlet opening of the seawater delivery pipe 273 is extended to a location higher than the seawater osmosis chamber 27, thus there is no need to setup the seawater one-way valve. In addition, as shown in Figure 20c, a discharge outlet can be installed so as to discharge seawater which are infiltrated into the device through the gap between the large piston 25 and cylinder block 22 timely, and it's also doable to arrange part of the support platform 3' to be inclined, as shown in Figure 20d.

The working process of the sea reverse osmosis device of the said example is described as follows.

The power generation device in the said example is installed in the ocean at a location with a depth within 200m. At initial position, the two first magnet bodies 5 are separated from each other. The drive motor 1 is started up and moves the first magnet bodies 5 to joint with each other. When the moving first magnet body 5 cuts in the position below the second magnet body 6 which is suspending above it, the repulsive force between them brings the first piston 271, the second piston 282 and the third piston 303 up; as the water pressure in the osmosis chamber is reduced, seawater flows thereinto through seawater delivery pipe 273. When the water amount in the osmosis chamber 27 reaches the max value, that is, when the large piston 25 is placed above the water surface, the first magnet bodies 5 are driven to move away from each other, that is, the first magnet body 5 leaves the position rightly under the second magnet body 6, which results in the vanish of repulsive force, the large piston 25 and the seawater held thereon go down by the gravity at a set speed, which brings the first piston 271, the second piston 282 and the third piston 303 down vertically to press the seawater in the sea osmosis chamber 27, freshwater in the pressed seawater flows into the freshwater reservoir 28 through osmosis membrane 29, then into freshwater discharge chamber 281, and is discharged into the freshwater collecting device by the pressure of second piston 282; the remaining condensed water are pressed into the condensed water reservoir 30 and then into the condensed water collecting chamber by the pressure of third piston 303. The process that freshwater discharge chamber 281 and the second piston 282 setup in it empty the infiltrated water reserved therein and the process that condensed water reservoir 30 and the third piston 303 setup in it empty the infiltrated water reserved therein also can buffer the downward pressure of the first piston 271, so as to prevent the pressure from too much to damage the mechanism and reverse osmosis membrane cooperated with it. Meanwhile, the link rod connecting the second piston 282 to the third piston 303 is also equipped with safety protection device to ensure that the second piston 282 and the third piston 303 will not impact the bottom of their chambers strongly. The whole process repeats in cycle to obtain plenty of freshwater and condensed seawater rich in mineral substance.

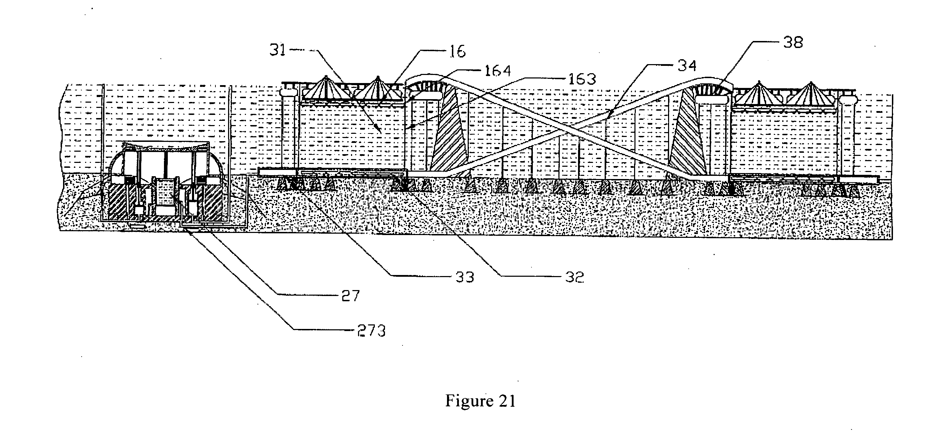

Please refer to Figure 21 which represents the power generation device according to example 17 of the invention. The said device is installed in seawater of coastal water and comprises sea reverse osmosis device and power-generating mechanism in example 16. Wherein, the power-generating mechanism includes liquid chamber 31, shift device 32, discharge device 33 and waterless pipeline 34. Since the power-generating mechanism in the said example is installed in seawater, the seawater can form a natural liquid chamber 31 used for ascending and descending movements of movement body 16, for the purpose of saving material, there is no need to setup walls of movement chamber 31. However, in order to control movement body 16 to move along a set route, a guiding sliding track 163 is required and ring-shaped sliding hook 164 is set up at a side of movement body 16. The discharge device 33 is connected with the sea reverse osmosis device. Meanwhile, since all components are installed in the seawater, specialized underwater fixing device 38 is needed to fix each component. The underwater fixing device 38 comprises an anchorage pile installed in the ground floor of the ocean, a steel cable fixed in the anchorage pile, a floater fixed by the steel cable, a float board support column fixed on the floater, a float board fixed on the top of the float body support column.

During the process of power generation, liquid in the shift device 32 are delivered into osmosis chamber 27 of the sea reverse osmosis device by discharge device 33 through seawater delivery pipe 273 and transferred into condensed seawater and freshwater after reverse osmosis treatment by the said device. The condensed seawater and freshwater are collected into corresponding collecting device respectively to ensure that the sea reverse osmosis device can accept seawater from discharge device 33 in cycle, thus ensure that the shift device 32 can shift in cycle, so as to allow the device to produce power in cycle. About the specific working principle of the power generation device, please refer to another patent application PCT/CN2006/002239 by the identical applicant.

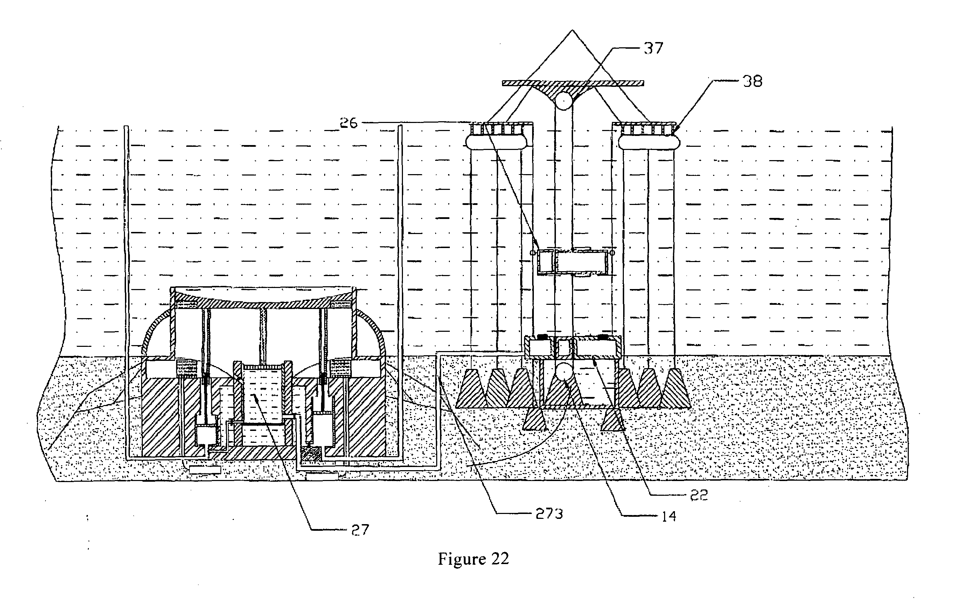

Please refer to Figure 22 which represents the power generation device according to example 18 of the invention. The said device is installed in seawater of coastal water and comprises the sea reverse osmosis device and the power-generating mechanism in example 16, wherein the power-generating mechanism comprises: liquid chamber 31, shift device 32, discharge device 33, tank 36 and power-generating unit. The power-generating unit is generator 14'.

Liquid chamber 31 is a cube container for storing certain amount of water.

The shift device 32 is installed at the lower part of the liquid chamber 31, with upper trap door and air hole. The upper trap door installed with liquid inlet hole and first through hole at its upper part separates the liquid chamber 31 from the shift device 32. The seawater delivery pipe 273 of the sea osmosis device is connected with the shift device 32 and leads to the osmosis chamber 27 of the sea reverse osmosis device. During the process of power generation, liquid in the shift device 32 is discharged into the sea reverse osmosis device and transferred into condensed seawater and freshwater after reverse osmosis treatment by the said device. The condensed seawater and freshwater are collected into corresponding collecting device respectively to ensure that the sea reverse osmosis device can accept seawater from shift device 32 in cycle, thus ensure that the shift device 32 can shift in cycle, so as to allow the power generation device to produce power in cycle.

Tank 36 is a hollow tank with a plurality of liquid in-out openings that can be opened/closed installed thereon, wherein, the location of the lower liquid in-out opening corresponds to the location of liquid inlet hole on the upper trap door 21. The relationship between gravitation and flotage of the tank 36 can be changed through filling liquid to its hollow part or discharging liquid from it to convert kinetic energy into electric energy by making the tank 36 descend and ascend in liquid chamber continuously to generate power.

The liquid chamber 31 is installed with power-generating unit 14 under it and pulley block 37 above it. The amount of the generator unit 14 is as the same as that of pulley block 37. The said pulley block 37 includes pulley and toothed belt; correspondingly, a plurality of fixing parts and a plurality of second through holes are arranged on the tank 36. The positions of the first and second through holes are corresponding to each other, respectively. The pulley is fixed under the liquid chamber 31. The toothed belt whose upper end rounds the motor wheel and lower end passes through the first and second through holes goes around the pulley setup under the liquid chamber 31 to form a approximate rectangle. The said tank 36 is fixed at one vertical edge of the said approximate rectangle by fixing component. The movement of the tank 36 is transported to the motor wheel in each power-generating unit 14 though the pulley block, to drive the power-generating unit 14 to rotate for producing power.

Since all components are installed in the seawater, specialized underwater fixing device 38 is needed to fix each component. The structure of the said fixing device 38 is the same as that in example mentioned above.

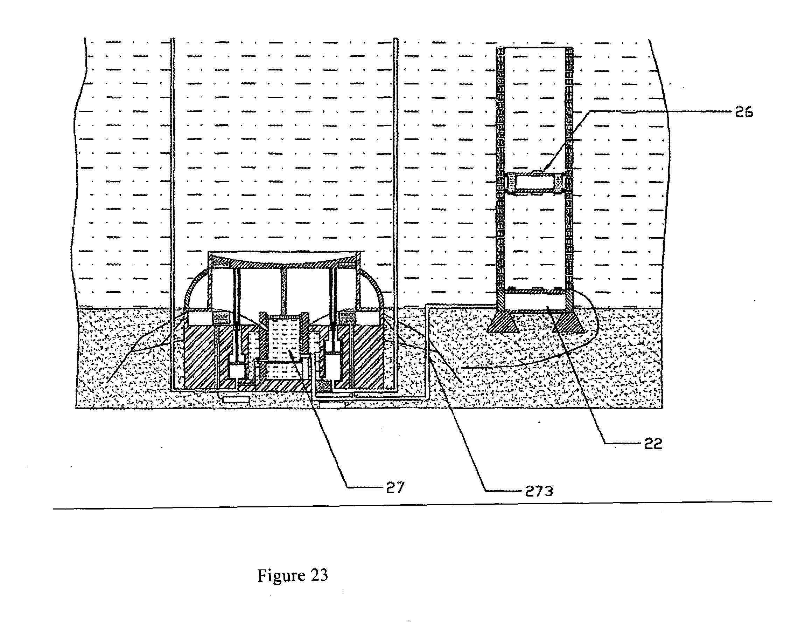

Please refer to Figure 23 which represents the power generation device according to example 19 of the invention. The said power generation device is installed in the seawater of coastal water and comprises the sea reverse osmosis device and power generation mechanism in example 16. Wherein, the said power generation mechanism includes: liquid chamber 31, shift device 32, tank 36 and power-generating unit. The power-generating unit is metal coil 10 and magnet 11.

Liquid chamber 31 is a cube container for storing certain amount of water.

The shift device 32 is installed at the lower part of the liquid chamber 31, with the upper trap door and air hole (not shown). The upper trap door installed with liquid inlet hole at its upper part separates the liquid chamber 31 from the shift device 32.

Through the said discharge hole, liquid in the shift device 32 can be discharged to seawater delivery pipe 273 whose end leads to the osmosis chamber 27 of the sea reverse osmosis device. During the process of power generation, liquid in the shift device 32 are discharged into osmosis chamber 27 of the sea reverse osmosis device and transferred into condensed seawater and freshwater after reverse osmosis treatment by the said device. The condensed seawater and freshwater are collected into corresponding collecting device respectively to ensure that the sea reverse osmosis device can accept seawater from shift device 32 in cycle, thus ensure that the shift device 32 can shift in cycle, so as to allow the power generation device to produce power in cycle.

Tank 36 is a hollow tank with a plurality of liquid in-out openings that can be opened/closed installed at its upper and lower part, wherein, the location of the lower liquid in-out opening corresponds to the location of liquid inlet hole on the upper trap door. The relationship between gravitation and flotage of the tank 36 can be changed through filling liquid to its hollow part or discharging liquid from it to convert kinetic energy into electric energy by making the tank 36 descend and ascend in liquid chamber continuously to generate power. In order to control the distance between the tank 36 and the inner wall of liquid chamber 31 and ensure that the device runs in stable state, roller wheel is setup on tank 36. The said roller wheel touching the inner wall of liquid chamber 31 can slide thereon.

The form of layout of the power-generating unit is as follows: coil 10 is installed in the inner wall of liquid chamber 31, magnet 11 is installed in the tank 36, and cable 12 is connected to the metal coil to transport the generated power to outside.

About the specific working principle of the power generation device, please refer to another patent application PCT/CN2006/002239 by the identical applicant.

## Claims

1. A lifting device **characterized in that** the lifting device comprises:
at least one first magnetic body, the said first magnetic body is positioned on a platform and driven by an driving unit so as to move along a predetermined track;
at least one second magnetic body, the said second magnetic body is positioned above part of track of the said first magnetic body whose magnetism is repulsive to that of the first magnetic body;
a lifting mechanism which is positioned on a supporting device and connected to the second magnetic body;
wherein, the second magnetic body is lifted or lowered vertically in cycle according to the said first magnetic body's passing through or leaving from the second magnetic body in cycle at a set speed, so as to drive the said lifting mechanism to be lifted, lowered or swung.

2. A lifting device of Claim 1 **characterized in that** the said platform is a rotation platform which can rotate around an axis; the said driving unit is connected to the rotation platform to drive the platform to rotate; the said first magnetic body is fixed on the rotation platform and rotates following the rotation of the said platform.

3. A lifting device of Claim 1 **characterized in that** the said platform is a supporting platform which is installed fixedly, the said driving unit is connected to the said first magnetic body to drive the said first magnetic body to move on the said supporting platform.

4. A lifting device of Claim 1 **characterized in that** the said lifting mechanism is a member bar group, which comprises a cross rod and a vertical rod positioned vertically under the cross rod;
the said support bracket is set up with a hole on its top part, the said hole has a diameter slightly larger than that of the said vertical rod and smaller than the length of the said cross rod to enable the said vertical rod to penetrate the said hole to do vertical motion.
the lower parts of both ends of the said cross rod are set up with buffer springs for buffering a possible impact on the said support bracket by the said cross rod when the member bar group falls down by gravity.

5. A lifting device of Claim 1 **characterized in that** the said lifting mechanism is a pulley block, which includes a plurality of fixed pulleys and toothed rope-buckle cable bypassed the said fixed pulleys, and one end of the said toothed rope- buckle cable is fixed with the second magnetic body and another end is connected with a lifting stand.

6. A lifting device of Claim 1 **characterized in that** the said lifting mechanism is a hydraulic lifting mechanism, which includes a liquid reservoir, a hydraulic cylinder, a piston positioned inside the said hydraulic cylinder, an extension sleeve, as well as drainage pipelines and one-way valves connected with the said liquid reservoir, the said hydraulic cylinder and the said extension sleeve; a lifting stand is fixed on the upper top part of the said extension sleeve; wherein, the said second magnetic is connected with the said piston.

7. A lifting device of Claim 1 **characterized in that** the said lifting mechanism comprises at least a set of oscillating piece with magnetic pivot and a bearing support with magnetic support whose shape and position correspond to those of the said magnetic pivot; the magnetism of the said magnetic pivot is repulsive to that of the said magnetic support, to ensure that the said oscillating piece suspends above the said bearing support; wherein, the said second magnetic body is positioned below the end of the said oscillating piece.

8. A power generation device of Claim 7 **characterized in that** the said oscillating piece comprises a lever and a stabilizing bracket which is fixed on the said lever.

9. A power generation device of Claim 7 **characterized in that** the said oscillating piece comprises a disc-type stabilizing bracket and annular pipe fittings positioned at the outer edge of the disc-type stabilizing bracket.

10. A power generation device **characterized in that** the said power generation device comprises:
a lifting device of Claim 1,
a movement pipeline; the said movement pipeline positioned around the movement track of the said second magnetic body;
a metal coil for power generation positioned in pipe wall of the said movement pipeline;
a power output device connected with the said metal coil to transport the generated power outside.

11. A power generation device **characterized in that** the said power generation device comprises:
a lifting device of Claim 4;
a generator fixed at the upper part of the support bracket, the rotor of the said generator which is connected to the said lifting mechanism and is driven by the said lifting mechanism to rotate to produce power;
a power output device connected with the metal coil of the said generator to transport the generated power outside.

12. A power generation device **characterized in that** the said power generation device comprises:
a said lifting device in any one of claim 7, 8 and 9, wherein, pipe fittings are fixedly positioned in the said oscillating piece, the said pipe fittings swing along with the said oscillating piece, the movement body installed in the said pipe fittings moves back and forth therein by the function of its gravity; a magnet or metal coil is installed on pipe wall of the said pipe fittings, a metal coil or magnet is installed in the said movement body, correspondingly.

13. A power generation device comprises:
a lifting device of Claim 5 or 6,
a lifting channel including an upstream channel and a downlink channel, in which the said lifting stand is lifted and lowered in the said upstream channel, the upper opening of the said downlink channel connected to the upper opening of the said upstream channel and a lower opening of the said downlink channel connected to the lower opening of the said upstream channel;
a movement body for power generation, which moves circularly in a lifting channel formed by the said upstream channel and the said downlink channel;
a metal coil or magnet installed in the said movement body, while a magnet or metal coil is installed in the said downlink channel, correspondingly;
a power output device, which is connected with the said metal coil and transports the generated power to outside.

14. A power generation device of Claim 13 **characterized in that** the said power generation device further comprises a member bar group connected with the second magnet body, the vertical rod of the member bar group connected with the rotor of the generator.

15. A power generation device **characterized in that**,
a lifting device of Claim 1, wherein, the said lifting mechanism is a large piston with a lifting rod fixedly positioned below the piston;
a lifting channel installed at the center of the rotation platform; the lower end of the said lifting rod is deeply inserted into the said lifting channel;
a movement body fixedly positioned at the lower end of the said lifting rod, moving up and down in the said lifting channel along with the said lifting rod;
a hydraulic buffer device including a water tank, a water tank piston, a bumper bracket fixed on the water tank piston and a buffer board fixed on the top of the bumper bracket which penetrates into the lifting channel, the discharge pipeline connected with the water tank and outside environment.

16. A seawater reverse osmosis device **characterized in that** the seawater reverse osmosis device which is installed in the seawater comprises:
a lifting device of Claim 1; wherein, the said lifting mechanism is a large disk-shaped piston with a lifting rod fixedly positioned below the piston;
a large piston, the said second magnet body is fixedly positioned at the lower part of the said large seawater piston;
an osmosis chamber, which is set up with a piston fixedly connected to the said large piston;
a seawater delivery pipeline, of which one end connects the osmosis chamber and the other end leads to the seawater;
a freshwater reservoir, in which the reverse osmosis membrane is installed between the said osmosis chamber and the said freshwater reservoir and connects to a freshwater collecting device through a freshwater discharge pipeline;
a condensed water reservoir; which connects to the lower part of the osmosis chamber through a condensed water delivery pipeline, and connects to a condensed water collecting device through a condensed water discharge pipeline.
